# EUROPÄISCHE PATENTSCHRIFT

(11) **EP 3 291 969 B1**
(45) Veröffentlichungstag und Bekanntmachung des Hinweises auf die Patenterteilung: **22.04.2020**
(21) Anmeldenummer: 16722123.3
(22) Anmeldetag: 04.05.2016
(51) Int. Cl.: B29C 64/106, B29C 64/20, B41J 2/51, B33Y 10/00, B33Y 30/00, B33Y 40/00

(54) **VORRICHTUNG UND VERFAHREN ZUR BILDUNG EINES DREIDIMENSIONALEN OBJEKTES**
APPARATUS AND METHOD FOR FORMING A THREE-DIMENSIONAL OBJECT
DISPOSITIF ET PROCÉDÉ PERMETTANT LA CRÉATION D'UN OBJET EN TROIS DIMENSIONS

(30) Priorität: 06.05.2015 AT 503662015
(43) Veröffentlichungstag der Anmeldung: 14.03.2018
(60) Teilanmeldung: 20162947.4
(73) Patentinhaber: Xioneer Systems GmbH, 1220 Wien (AT)
(72) Erfinder: NEBOIAN, Andrei, 1220 Wien (AT); HEIN, Robert, 1190 Wien (AT)
(74) Vertreter: Puchberger & Partner Patentanwälte
(86) Internationale Anmeldenummer: PCT/EP2016/059985
(87) Internationale Veröffentlichungsnummer: WO 2016/177772

(56) Entgegenhaltungen:
- EP-A1- 1 974 931
- WO-A1-97/17664

## Beschreibung

Die Erfindung betrifft eine Vorrichtung und ein Verfahren zur Bildung eines formstabilen, dreidimensionalen Objektes durch konsekutives oder kontinuierliches Auftragen und Aushärten eines formbaren Druckmaterials.

Eine Vorrichtung gemäß dem Oberbegriff des Anspruchs 1 ist aus Dokument WO9717664 bekannt.

Die Erfindung betrifft insbesondere einen 3D-Drucker, der nach dem FFF-Verfahren, also nach dem sogenannten "fused filament fabrication"-Verfahren arbeitet. Bei dieser Art der 3D-Drucker wird ein schmelzbares, insbesondere drahtförmiges oder filamentförmiges Druckmaterial in einem Druckkopf aufgeschmolzen und durch gezieltes, mehrlagiges, punktförmiges und/oder streifenförmiges Auftragen und Aushärten zu einem gewünschten dreidimensionalen Objekt umgeformt. Gattungsähnliche 3D-Drucker sind in unterschiedlichen Ausführungsformen bekannt und publiziert. Beispielsweise sind Filamentdrucker bekannt, bei denen eine beheizte Düse gegenüber einer Basis bewegt werden kann, um das aufgeschmolzene Druckmaterial in gewünschter Form aufzutragen. Nachteilig an diesen herkömmlichen Vorrichtungen ist, dass während eines durchgängigen Druckvorgangs lediglich ein einziges Druckmaterial aufgetragen werden kann. Da jedoch bei komplexeren dreidimensionalen Objekten eine Stützstruktur notwendig sein kann, oder da gegebenenfalls unterschiedliche Druckmaterialien zum Aufbau des 3D-Objekts notwendig sind, besteht eine Nachfrage nach 3D-Druckern, die während eines durchgängigen Druckvorgangs zumindest zwei unterschiedliche Druckmaterialien umformen können. Zur Lösung dieses Problems sind sogenannte Zweikopfdrucker bekannt, bei denen zwei Druckköpfe mit zwei unterschiedlichen Druckmaterialien beschickt werden, wobei beide Druckköpfe ständig mit der Antriebseinheit verbunden sind. Nachteilig an diesen Systemen ist, dass durch den zweiten Druckkopf die bewegten Massen stark erhöht werden. Aufgrund der erhöhten Massen werden auch stärkere und somit größere Antriebe benötigt, was zu einer weiteren Erhöhung der Masse führt. Insbesondere sind gemäß Stand der Technik die Linearantriebe zur Bewegung der Druckköpfe auf bewegten Komponenten des Druckers angeordnet, wodurch die zu bewegenden Massen vervielfacht werden. Dies hat einen negativen Einfluss auf die Druckgeschwindigkeit und auf die Druckgenauigkeit des 3D-Druckers. Aufgabe der Erfindung ist es nun, die Nachteile des Standes der Technik zu überwinden. Dies umfasst insbesondere, dass der erfindungsgemäße Drucker zur Durchführung eines effizienten Druckverfahrens geeignet ist.

Die erfindungsgemäße Aufgabe wird durch die Merkmalskombinationen der unabhängigen Patentansprüche gelöst. Bevorzugte Ausführungsformen sind in den Unteransprüchen beschrieben.

Insbesondere betrifft die Erfindung eine Vorrichtung zur Bildung eines formstabilen, dreidimensionalen Objektes durch konsekutives oder kontinuierliches Auftragen und Aushärten eines formbaren Druckmaterials, insbesondere FFF-3D-Drucker, umfassend:
- einen als Basis für den Aufbau des Objektes wirkenden Basiskörper,
- mindestens einen Druckkopf zum Auftragen des Druckmaterials,
- eine Bewegungsvorrichtung zur Änderung der relativen Lage des Druckkopfes gegenüber dem Basiskörper, und
- mindestens ein Druckmaterialreservoir zur Aufnahme des Druckmaterials und zur Ausgabe des Druckmaterials an den Druckkopf,
- wobei die Bewegungsvorrichtung mindestens ein sich entlang einer x-Achse erstreckendes, langgestrecktes erstes Trägerelement umfasst,
- wobei ein mit dem Druckkopf verbundener oder verbindbarer Antriebsschlitten entlang der x-Achse am ersten Trägerelement linear geführt und insbesondere parallelgeführt ist, dadurch gekennzeichnet,
- dass zwei Druckköpfe vorgesehen sind,
- dass der Antriebsschlitten eine Kupplungsvorrichtung aufweist,
- und dass der Antriebsschlitten über die Kupplungsvorrichtung mit den Druckköpfen koppelbar und von den Druckköpfen lösbar ist,
- wobei der Antriebsschlitten über die Kupplungsvorrichtung wahlweise mit einem Druckkopf, mit keinem der Druckköpfe, oder mit beiden Druckköpfen gekoppelt ist.

Des Weiteren betrifft die Erfindung ein Verfahren zur Bildung eines formstabilen, dreidimensionalen Objektes durch konsekutives oder kontinuierliches Auftragen und Aushärten eines formbaren Druckmaterials, insbesondere zur Bildung eines formstabilen, dreidimensionalen Objektes durch konsekutives oder kontinuierliches Auftragen und Aushärten zweier formbarer Druckmaterialien, und insbesondere Verfahren zum Druckkopfwechsel, umfassend folgende Schritte:
- Bewegen des Antriebsschlittens und des mit dem Antriebsschlitten über eine Kupplungsvorrichtung gekuppelten ersten Druckkopfs,
- Bewegen des Antriebsschlittens zu einem zweiten Druckkopf, der sich in einer im Endbereich des ersten Trägerelements angeordneten Parkposition befindet und dort von einer Haltevorrichtung temporär arretiert ist,
- Kuppeln des zweiten Druckkopfs mit dem Antriebsschlitten über die Kupplungsvorrichtung,
- Lösen der Haltevorrichtung des zweiten Druckkopfs, sodass der zweite Druckkopf aus seiner Parkposition bewegt werden kann,
- wobei vor der Kupplung des zweiten Druckkopfs mit dem Antriebsschlitten oder nach der der Kupplung des zweiten Druckkopfs mit dem Antriebsschlitten der Antriebsschlitten und der mit dem Antriebsschlitten über eine Kupplungsvorrichtung gekuppelte erste Druckkopf zur Parkposition des ersten Druckkopfs befördert wird, dort die Haltevorrichtung des ersten Druckkopfs geschlossen wird und der erste Druckkopfs vom Antriebsschlitten gelöst wird, sodass der erste Druckkopf in seiner Parkposition arretiert ist,
wobei nach dem Druckkopfwechsel lediglich der zweite Druckkopf mit dem Antriebschlitte verbunden ist;
oder umfassend folgende Schritte:
- Bewegen des Antriebsschlittens und des mit dem Antriebsschlitten über eine Kupplungsvorrichtung gekuppelten ersten Druckkopfs zu der Parkposition des ersten Druckkopfs am Endbereich des ersten Trägerelements,
- Schließen der Haltevorrichtung des ersten Druckkopfs und Lösen des ersten Druckkopfs vom Antriebsschlitten durch Lösen der Kupplungsvorrichtung, sodass der erste Druckkopf in seiner Parkposition arretiert ist,
- Bewegen des Antriebsschlittens zu einem zweiten Druckkopf, der sich in einer im gegenüberliegenden Endbereich des ersten Trägerelements angeordneten Parkposition befindet und dort von einer Haltevorrichtung temporär arretiert ist,
- Kuppeln des zweiten Druckkopfs mit dem Antriebsschlitten über die Kupplungsvorrichtung,
- Lösen der Haltevorrichtung des zweiten Druckkopfs, sodass der zweite Druckkopf aus seiner Parkposition bewegt werden kann,
- und Bewegen des Antriebsschlittens und des mit dem Antriebsschlitten über die Kupplungsvorrichtung gekuppelten zweiten Druckkopfs.

In weiterer Folge werden die Erfindung und deren optionale Einzelkomponenten anhand der Figuren weiter beschrieben.
Fig. 1 zeigt eine schematische Schrägansicht einer Ausführungsform eines erfindungsgemäßen Druckers.
Fig. 2 zeigt eine Schrägansicht eines Details der Bewegungsvorrichtung.
Fig. 3 zeigt eine schematische Ansicht einer Bewegungsvorrichtung, wobei die Bildebene im Wesentlichen der x-y-Ebene entspricht.
Fig. 4 zeigt zwei schematische Ansichten einer Konfiguration von zwei Antriebsriemen zum Antrieb des Druckkopfs entlang der x-y-Ebene, wobei bevorzugt die beiden dargestellten Riemenführungen in zwei Parallelebenen angeordnet sind.
Fig. 5 zeigt eine schematische Schrägansicht des Andocksystems bzw. der Kupplungsvorrichtung.
Fig. 6 zeigt zwei schematische Ansichten eines Druckkopfs, wobei die linke Ansicht eine schematische Schrägansicht ist. Bei der rechten Ansicht folgt die Sichtachse im Wesentlichen der x-Achse.
Fig. 7 zeigt eine schematische Ansicht der Schritte eines Druckkopfwechsels.
Fig. 8 zeigt einen Teil der Bewegungsvorrichtung, insbesondere der Basisantriebsvorrichtung.
Fig. 9 zeigt das Druckbett und die Druckplattform, bzw. den Basiskörper und Teile der Basisantriebsvorrichtung.
Fig. 10 zeigt eine schematische Darstellung der der Schritte zur Kalibrierung der Vorrichtung.
Fig. 11 zeigt eine schematische Darstellung einer möglicherweise aufgenommenen Kalibrierkurve, bzw. einer Kalibriermatrix oder einer Kalibrierfläche.
Fig. 12 zeigt eine Ausführungsform eines Druckkopfs in einer Schrägansicht von vorne bzw. von hinten in einer Außenansicht.
Fig. 13 zeigt Details eines Druckkopfs, insbesondere des Druckkopfs aus Fig. 12, wobei auch innenliegende Details dargestellt sind.
Fig. 14 zeigt die Düseneinheit eines Druckkopfs, insbesondere eine Düsenanordnung in einer Schrägansicht, in einer mittigen Schnittansicht, in einer Detailansicht der Düse und in einer Schnittdarstellung der Düse.
Fig. 15 zeigt eine beispielhafte Messung der rückwirkenden Motorspannung bei Motorbelastung, insbesondere aus 3 Phasen: 50-70: Normalbetrieb, 70-75: erhöhte Last, 75-90: Stillstand.
Fig. 16 zeigt eine Versorgungseinheit und Materialkassette, insbesondere ein Druckmaterialreservoir.
Fig. 17 zeigt ein Gegendruckelement bzw. eine Federplatte und eine Vorschubeinheit bzw. Details des Druckmaterialreservoirs und dessen Klemmvorrichtung.

Die Figuren zeigen konkrete Ausführungsformen einzelner, gegebenenfalls voneinander unabhängiger Komponenten, wobei Merkmale dieser oder weiterer Komponenten auch dem allgemeinen Beschreibungsteil entnommen werden können. Beispielsweise können die Bewegungsvorrichtung, das Andocksystem bzw. das Kupplungssystem, das vertikale Positioniersystem bzw. die Basisantriebsvorrichtung, der Druckkopf, die Düsenanordnung des Druckkopfs sowie das Druckmaterialreservoir unabhängig voneinander variiert werden. Die dargestellten und beschriebenen Ausführungsformen der Komponenten und der Zusammenstellung der Komponenten sind jeweils eine optional mögliche Ausführungsform. Die Erfindung ergibt sich insbesondere aus den Merkmalen der Patentansprüche und aus den Merkmalen der Beschreibung. Keinesfalls ist die Erfindung auf die in den Figuren dargestellten Ausführungsformen beschränkt. Beispielsweise kann die Bewegungsvorrichtung auch zur Bewegung eines Druckkopfs eingerichtet sein, der von dem dargestellten oder beschriebenen Druckkopf abweicht. Beispielsweise kann der beschriebene Druckkopfwechsel auch mit einer anderen Bewegungsvorrichtung durchgeführt werden. Beispielsweise kann auch die Kalibrierung lediglich mit einem Druckkopf, mit zwei oder mehr Druckköpfen und insbesondere auch mit einer anderen Bewegungsvorrichtung durchgeführt werden. Beispielsweise kann die Bewegungsvorrichtung auch ohne wechselbare Druckköpfe eingesetzt werden. Beispielsweise kann das Druckmaterialreservoir auch mit anderen Druckköpfen oder anderen Bewegungsvorrichtungen zum Einsatz kommen.

Wenn nicht anders angegeben, so entsprechen die Bezugszeichen folgenden Komponenten: Gehäuse 1, Bauraum 2, Steuerungseinheit 3, erstes Druckmaterial-Reservoir (für Modellmaterial oder Stützmaterial) 4, zweites Druckmaterial-Reservoir (für Modellmaterial oder Stützmaterial) 5, erster Versorgungsschlauch 6, zweiter Versorgungsschlauch 7, erster Druckkopf 8, zweiter Druckkopf 9, x-Achse 10, y-Achse 11, Druckobjekt 12, Stützstruktur 13, Druckbett bzw. Basiskörper 14, z-Achse 15, Andockeinheit 16, Zahnriemen 17, Führungsschlitten (in X-Richtung) 18, Führungsschiene (in X-Richtung) 19, Querbalken 20, Führungsschlitten oder Linearlager (in Y-Richtung) 21, Führungsschiene (in Y-Richtung) 22, Riemenantrieb oder Antriebseinheit 23, Lichtschranke (für Y-Achse) 24, Rahmen 25, Umlenkrolle 26, Riemenspanner 27, Seitenplatte 28, Lichtschranke (für Y-Achse) 29, Verriegelungseinheit 30, Umlenkrolle 31, Düsen-Abstreifer 32, Lichtleiste 33, Verbindungsplatte 34, Andockmagnet 35, Andockplatte 36 Schraube (zur Befestigung der Zahnriemen) 37, Loch (zur Aufnahme des Riegels) 38, vorderes Stützprofil 39, hinteres Stützprofil 40, Führungsschlitten oder Linearlager (in Z-Richtung) 41, Führungsschiene (in Z-Richtung) 42, Spindelmutter 43, Spindel oder Kugelumlaufspindel 44, Spindel-Kupplung 45, Schrittmotor (für Z-Achse) 46, Axiallager 47, Federstahlplatte 48, Druckoberfläche 49, Kunststoffplatte 50, Niete (zur Befestigung der Kunststoffplatten) 51, Trägerplatte 52, Abstandsplatte 53, hitzeresistenter Magnet 54, Heizmatte 55, Isoliermatte 56, Abstandsbolzen 57, Senkschraube (zur Befestigung der Trägerplatte) 58, Druckkopf-Vorderteil 59, Druckkopf-Mittelteil 60, Druckkopf-Abdeckplatte 61, Aussparung (zur Zahnriemen-Durchführung) 62, Schrittmotor (zur Materialextrusion) 63, Flachbandkabel 64, Schmelzeinheit 65, Axiallüfter 66, Radiallüfter 67, Luftkanal 68, Führungsrille 70, Gegendruck-Einheit 71, Antriebsrolle 72, Kühlkörper 73, Düseneinheit 74, Kühlkörper 75, Temperaturbarriere 76, Heizelement 77, Führungsrohr oder Führungsschlauch 78, Verbindungshülse 79, Düse 80, Einschubschacht 81, Führungsschienen 82, Auswurfeinheit 83, Verriegelungseinheit 84, berührungslose Übertragungseinrichtung wie beispielsweise RFID- oder NFC-Einheit oder berührungslose Datenübertragungseinheit 85, Vorschubeinheit 86, Adaptereinheit 87, Materialkassette 88, Druckmaterial (Modellmaterial oder Stützmaterial) 89, Druckmaterial-Spule 90, Außenschale 91, Federplatte oder Gegendruck-Element (gegebenenfalls Kunststoff-Platte) 92, berührungsloser Datenübertragungschip oder berührungslose Übertragungseinrichtung wie beispielsweise RFID- oder NFC-Chip 93, Bewegungsvorrichtung 94, Druckmaterialleitung 95, Datenverarbeitungseinrichtung 96, erstes Trägerelement 97, Antriebsschlitten 98, Kupplungsvorrichtung 99, Druckkopfschlitten 100, Schienenabschnitt 101, Endbereich 102, zweites Trägerelement 103, Haltevorrichtung 104, Parkposition 105, Halteelement 106, bewegbarer Riegel 107, Maschinengestell 108, x-y-Kinematik 109, x-y-Ebene 110, erster Antriebsriemen 111, erster Riemenantrieb 112, Riemenantriebsrad 113, erste Antriebsebene 114, zweiter Riemenantrieb 115, zweiter Antriebsriemen 116, zweite Antriebsebene 117, Verbindungsstelle 118, Eckposition 119, Basisantriebsvorrichtung 120, Basisantrieb 121, Führungselement 122, Linearantrieb 123, Linearführung 124, Buchse 125, Druckplattform 126, Heizvorrichtung 127, Druckkopfgrundkörper 128, Düsenanordnung 129, Entkopplungsstelle 130, Innenseite 131, Klemmvorrichtung 132, Klemmstellung 133, Einschubschacht 134, Klemmbacke 135, Förderstellung 136, Druckmaterialantrieb 137, Antriebsrad 138, Befestigungsvorrichtung 139, Referenzebene 140, Oberfläche (des Basiskörpers) 141, erste Druckschicht 142, zweite Druckschicht 143, Verbindungsstelle (der Düsenanordnung mit dem Druckkopfgrundkörper) 144.

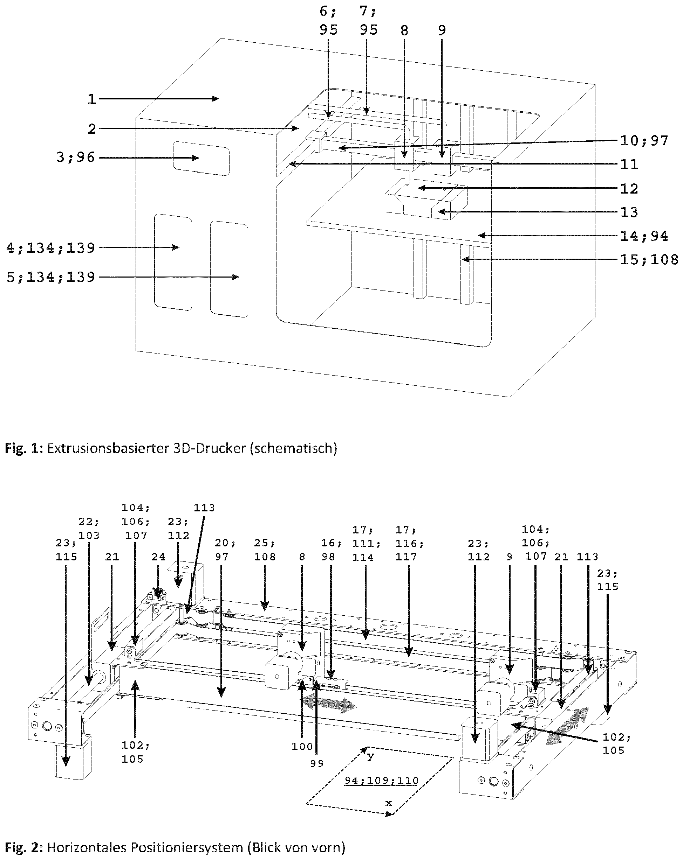

### Schematische Außenansicht (Fig. 1):

Der vorliegende extrusionsbasierte 3D-Drucker umfasst ein Gehäuse (1) mit einem Bauraum (2), einer Steuerungseinheit (3) und je einer Versorgungseinheit für thermoplastisches Modell- bzw. Stützmaterial (4/5), das in Form von Filamenten über Versorgungsschläuche (6/7) zu den beiden Druckköpfen (8/9) im Inneren des Bauraumes (2) befördert wird.
Die Druckköpfe (8/9), die entlang der X/Y-Achse (10/11) horizontal positioniert werden können, tragen das Druckobjekt (12) und die Stützstrukturen (13) Schicht für Schicht auf das Druckbett (14) auf, das entlang der Z-Achse (15) vertikal bewegt werden kann. Die Positionierung der Druckköpfe (8/9) und des Druckbetts (14) sowie die selektive Material-Extrusion werden von der Steuerungseinheit (3) koordiniert.

### Gehäuse und Bauraum (Fig. 1)

Der Bauraum (2) wird an den Seiten sowie hinten und unten vom Gehäuse (1) umschlossen. Eine transparente Schiebetür - nicht dargestellt - bildet den vorderen und oberen Abschluss, so dass das Druckobjekt (12) während des Druckvorgangs vor äußeren Einflüssen (z.B. Luftzug) geschützt ist und die Gefahr von Verletzungen durch bewegliche oder heiße Teile im Inneren des Bauraumes (2) minimiert wird. Lüfter in der Rückwand - nicht dargestellt - sorgen für einen kontinuierlichen Luftaustausch, um die elektronischen Komponenten im Inneren des Bauraumes (2) vor Überhitzung zu schützen.

Da das Gehäuse (1) an der vorderen Oberkante keine Querverstrebung besitzt, wird der Zugang zum Inneren des Bauraumes (2) wesentlich erleichtert. Daraus resultierende Stabilitätsnachteile werden durch entsprechende Verstärkungen an anderer Stelle kompensiert. Aus konstruktiven Gründen besitzt das Gehäuse (1) jeweils doppelte Seitenwände sowie eine Trennwand, die den Bauraum (2) von den Steuerungs- und Versorgungseinheiten (3, 4, 5) auf der linken Seite abgrenzt.
Die transparente Schiebetür - nicht dargestellt -, die von der vorderen Unterkante bis zur hinteren Oberkante des Gehäuses (1) reicht, erlaubt auch während des Druckvorgangs ungehinderte Sicht auf das Druckobjekt (12) aus verschiedenen Blickwinkeln. Über Teleskopschienen an der Unterseite sowie an der Rückseite des Gehäuses (1) kann die Schiebetür nach links aufgeschoben werden und verdeckt dabei die Steuerungs- und Versorgungseinheiten (3, 4, 5), so dass der vorhandene Platz optimal genutzt wird und der Druckvorgang aus Sicherheitsgründen nur bei geschlossener Tür gestartet werden kann. Sollte die Tür während des Druckvorgangs geöffnet werden, wird dies von einem Sensor erkannt und der Druck sofort unterbrochen.

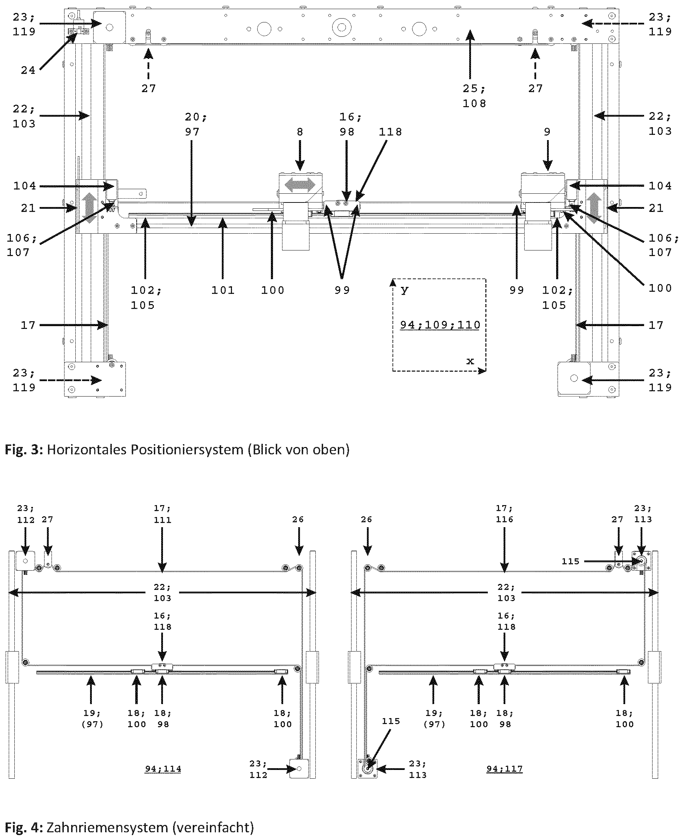

### Horizontales Positioniersystem (Fig. 2 und Fig. 3)

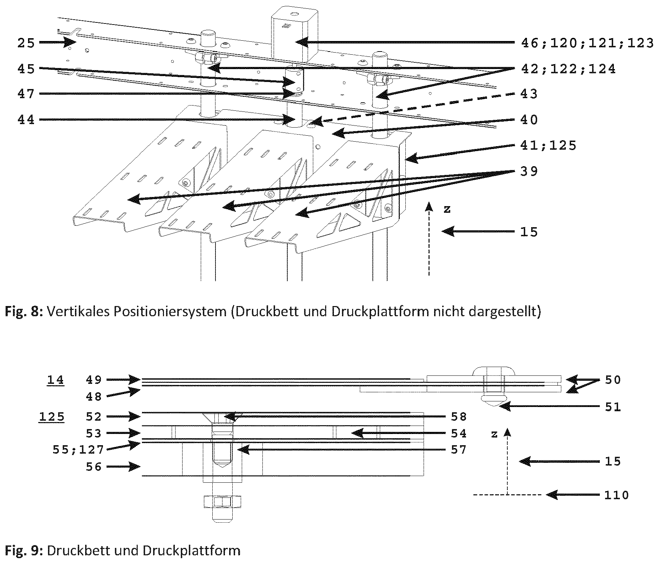

Beide Druckköpfe (8, 9) sowie die dazwischen befindliche Andockeinheit (16), die mit Hilfe von zwei Zahnriemen (17) bewegt werden kann, sind über Führungsschlitten (18) mit derselben Führungsschiene (19) verbunden. Während der eine Druckkopf (8) mit der Andockeinheit (16) verbunden ist und somit in X-Richtung (10) positioniert werden kann ("Druckposition"), wartet der andere Druckkopf (9) am Ende der Führungsschiene (19) außerhalb des Druckbereichs ("Parkposition").
Der Querbalken (20), an dem die Führungsschiene (19) befestigt ist, ist über Linearlager (21) an den Enden mit den seitlichen Führungsschienen (22) verbunden und somit in Y-Richtung (11) frei beweglich. Über die beiden Zahnriemen (17) kann der Querbalken (20) und somit der aktive Druckkopf (8) in Y-Richtung (11) positioniert werden. Die beiden Zahnriemen (17) werden von jeweils zwei Antriebseinheiten (23) bewegt, die aus einem Schrittmotor und einer Antriebsrolle bestehen und am Gehäuse (1) installiert sind.
Die zwei Führungsschienen (22), die vier Antriebseinheiten (23), eine Lichtschranke (24) zur Referenzierung der Y-Achse, sowie mehrere Umlenkrollen und Teile des vertikalen Positioniersystems (siehe Fig. 8) sind in einem Rahmen (25) aus U-förmigen Stahlprofilen montiert. Dieser bietet zusätzliche Stabilität und erlaubt es, das horizontale Positioniersystem als Ganzes vorzumontieren. Abstandshalter zwischen Rahmen (25) und Antriebseinheiten (23) erleichtern die Montage der Umlenkrollen und reduzieren die Übertragung von Vibrationen. Da die Schrauben, mit denen die Wellenhalter am Rahmen (25) befestigt sind, von außen zugänglich sind, können die Führungsschienen (22) nach der Endmontage noch ausgerichtet werden.

### Zahnriemensystem (Fig. 4)

Jeder der beiden Zahnriemen (17) ist mit beiden Enden an der Andockeinheit (16) befestigt und verläuft zunächst nach außen, bis er am Ende des Querbalkens (20) nach vorne umgelenkt wird. Nach Passieren der vorderen Antriebseinheit (23) verläuft er in entgegengesetzter Richtung zur hinteren Umlenkrolle (26) und von dort aus weiter zum Riemenspanner (27) und zur hinteren Antriebseinheit (23) auf der gegenüber liegenden Seite. Nach Passieren der hinteren Antriebseinheit (23) verläuft er wieder nach vorne und wird am Ende des Querbalkens (20) zurück zur Andockeinheit (16) umgelenkt.
Der zweite Zahnriemen, der einen gespiegelten Verlauf aufweist, befindet sich auf einer zweiten vertikalen Ebene, um eine Überschneidung mit dem ersten Zahnriemen zu vermeiden. Im Gegensatz zu einem herkömmlichen Zahnriemensystem, bei dem sich mindestens ein Antriebsmotor auf dem beweglichen Querbalken befindet, sind beim verwendeten System alle Antriebsmotoren am Gehäuse befestigt, so dass aufgrund der geringeren beweglichen Massen höhere Beschleunigungen sowie Verfahr-Geschwindigkeiten erreicht werden können. Im Gegensatz zu einem herkömmlichen System verhindert die doppelte Zahnriemenführung ein Verkanten des Querbalkens, was negative Auswirkungen auf die Positioniergenauigkeit des Druckkopfes sowie auf den Verschleiß der Führungselemente hätte.

Die vorderen Umlenkrollen dienen dazu, den Umschlingungswinkel des Zahnriemens (17) um die vorderen Antriebseinheiten (23) zur besseren Kraftübertragung zu vergrößern und den Trum-Abstand vor und nach Umlaufen der Antriebseinheit (23) zu reduzieren. Dadurch kann der Zahnriemen-Durchlass im Querbalken (20) verkleinert werden, was sich positiv auf dessen Steifigkeit sowie auf die Raumausnutzung auswirkt. Die hinteren Umlenkrollen vergrößern sowohl den Umschlingungswinkel des Zahnriemens (17) um die hinteren Antriebseinheiten (23) als auch den Abstand zwischen Zahnriemen (17) und Rahmen (25), um die Montage der Riemenspanner (27) sowie des vertikalen Positioniersystems (siehe Fig. 8) zu ermöglichen.
Durch die synchrone Verwendung von zwei Antriebsmotoren pro Zahnriemen können nicht nur höhere Beschleunigungskräfte sondern auch höhere Positioniergenauigkeiten erreicht werden, da die Trum-Länge zwischen Antriebsmotor und Druckkopf verkürzt und die Elastizität des Zahnriemensystems reduziert wird.

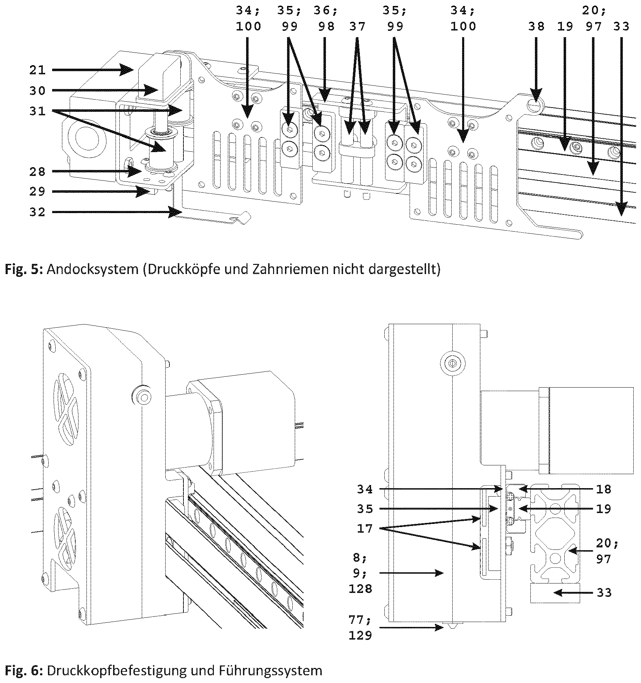

### Lineares Führungs- und Andocksystem (Fig. 5 und Fig. 6)

Die beiden Enden des Querbalkens (20) sind über U-förmige Seitenplatten (28) mit den Linearlagern (21) verbunden, die sich auf den seitlichen Führungsschienen (22) in Y-Richtung frei bewegen können. Auf der Seitenplatte (28) befinden sich zudem eine Lichtschranke (29) zur Referenzierung der X-Achse, eine Verriegelungseinheit (30), zwei Umlenkrollen (31) sowie ein Düsen-Abstreifer (32). Eine Lichtleiste (33) an der Unterseite des Querbalkens (20) beleuchtet das Druckbett (14) mit dem Druckobjekt (12) von oben.

Die Führungsschiene (19) mit den drei Führungsschlitten (18) ist auf der Rückseite des Querbalkens (20) montiert. Die beiden äußeren Schlitten sind jeweils über eine Verbindungsplatte (34) mit einem Druckkopf (8 bzw. 9) verbunden. Dazwischen befindet sich ein Durchlass für die beiden Zahnriemen (17) sowie für den Andockmagnet (35). Der mittlere Schlitten ist mit der Andockeinheit (16) verbunden, die sich aus einer U-förmigen Befestigungsplatte (36) mit zwei Schrauben (37) zur Befestigung der Zahnriemen (17) sowie je einem Andockmagneten (35) auf beiden Seiten zusammensetzt.
Während des Druckvorgangs ist der aktive Druckkopf (8) über den auf der Verbindungsplatte (34) montierten Andockmagneten (35) mit der Andockeinheit (16) verbunden und kann somit positioniert werden, während der inaktive Druckkopf (9) von der Verriegelungseinheit (30) in seiner Parkposition am Ende der Führungsschiene (19) festgehalten wird.

Um den aktiven Druckkopf (8) zu parken, wird er von der Andockeinheit (16) in seine Parkposition bewegt und dort von der Verriegelungseinheit (30) festgehalten, indem der Riegel - nicht sichtbar - in ein entsprechendes Loch (38) in der Verbindungsplatte (34) ausgefahren wird. Bewegt sich die Andockeinheit (16) nun wieder zur Mitte des Druckbereichs, werden die beiden Andockmagneten (35) durch die Kraft der Zahnriemen (17) auseinander gezogen und somit der Druckkopf (8) von der Andockeinheit (16) getrennt.

Um den geparkten Druckkopf (9) zu aktivieren, fährt die Andockeinheit (16) zu dessen Parkposition bis sich die Andockmagneten (35) verbinden, bevor der Druckkopf (9) durch Öffnen der Verriegelungseinheit (30) freigegeben wird. Anschließend fährt die Andockeinheit (16) zusammen mit dem Druckkopf (9) wieder in den Druckbereich und passiert dabei den Düsen-Abstreifer (32), um vorher abgelassenes und eventuell nachlaufendes Druckmaterial zu entfernen bevor der Druck mit dem neuen Druckkopf (9) fortgesetzt wird.

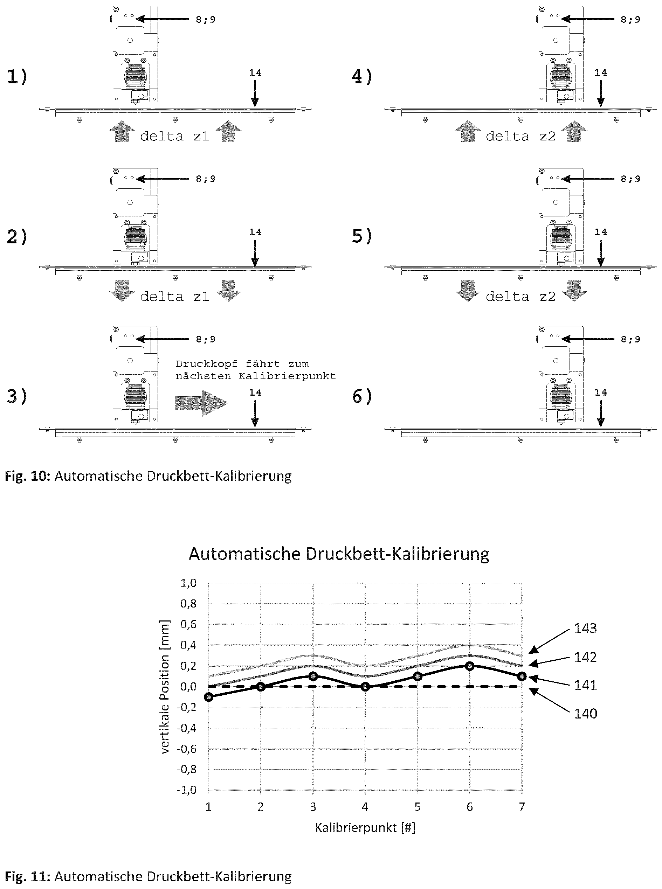

Da sich der geparkte Druckkopf (9) außerhalb des Druckbereichs befindet, besteht nicht die Gefahr, dass das Druckobjekt (12) durch unkontrolliert nachlaufendes Druckmaterial verunreinigt wird. Um dies zu vermeiden, müsste die inaktive Düse bei einem Zwei-Düsen-Druckkopf vor einem Materialwechsel vollständig abgekühlt und vor einem erneuten Materialwechsel wieder aufgeheizt werden, was deutlich mehr Zeit in Anspruch nehmen würde. Alternativ müsste die inaktive Düse mechanisch angehoben und abgedeckt werden, was sehr aufwändig umzusetzen wäre, insbesondere vor dem Hintergrund der engen Toleranzen beim Abstand zum Druckbett (14).
Da nur der aktive Druckkopf (8) in X-Richtung bewegt werden muss, während der inaktive Druckkopf (9) in seiner Parkposition bleibt, können bei gleicher Zahnriemenkraft aufgrund der geringeren beweglichen Masse höhere Beschleunigungen und somit höhere Druckgeschwindigkeiten erreicht werden. Zudem wird die automatische Kalibrierung (siehe Fig. 10) wesentlich erleichtert, da das Druckbett (14) von beiden Druckköpfen separat abgetastet werden kann, während sich der jeweils andere Druckkopf in seiner Parkposition außerhalb des Druckbereichs befindet. Anderenfalls müsste der vertikale Abstand beider Düsen mit großem Aufwand manuell eingestellt werden.

Zusätzlich besteht die Möglichkeit, beide Druckköpfe gleichzeitig aus dem Druckbereich zu entfernen, so dass das Druckbett (14) bis zur Unterseite des Querbalkens (20) hochgefahren werden kann. Dies erlaubt es, das Druckobjekt (12) nach Beendigung des Druckvorganges automatisch auszuwerfen, indem es mit Hilfe des Querbalkens (20) nach vorne oder hinten vom Druckbett (14) geschoben wird.

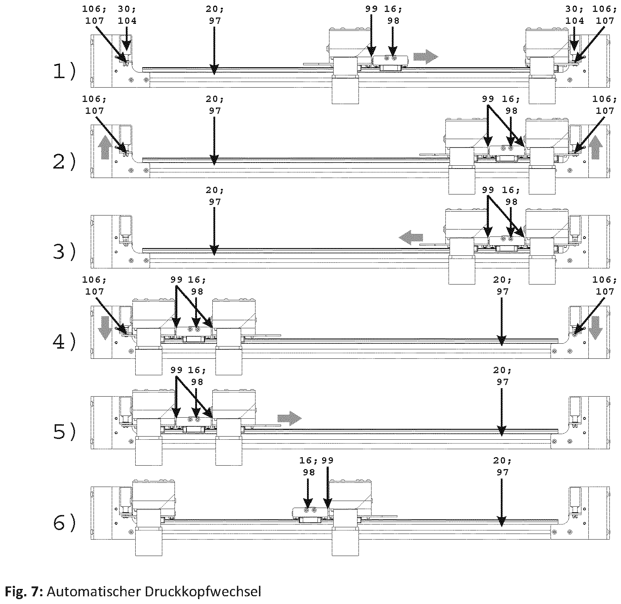

### Automatischer Druckkopfwechsel (Fig.7)

Der automatische Druckkopfwechsel läuft beispielsweise wie folgt ab:
1) Zunächst wird die Andockeinheit (16) zusammen mit dem ersten Druckkopf (8) zur Parkposition des zweiten Druckkopfes (9) bewegt.
2) Als nächstes werden die Verriegelungseinheiten (30) auf beiden Seiten geöffnet, so dass der zweite Druckkopf (9) freigegeben wird.
3) Anschließend wird die Andockeinheit (16) zusammen mit beiden Druckköpfen (8/9) zur Parkposition des ersten Druckkopfes bewegt.
4) Dort angekommen werden die beiden Verriegelungseinheiten (30) wieder geschlossen, so dass der erste Druckkopf (8) in seiner Parkposition festgehalten wird.
5) Schließlich wird die Andockeinheit (16) zusammen mit dem zweiten Druckkopf (9) wieder zurück in den Druckbereich bewegt.
6) Nun befindet sich der zweite Druckkopf (9) in Druckposition.

Im Gegensatz zu einem Druckkopfwechsel, bei dem der aktive Druckkopf (8) geparkt wird bevor der geparkte Druckkopf (9) reaktiviert wird, können die beiden Verriegelungseinheiten (30) zur Vereinfachung der Steuerung parallel geschaltet werden. Würden die Verriegelungseinheiten (30) vor dem Andocken des zweiten Druckkopfes (9) geöffnet werden, kann sich dieser z. B. durch Vibrationen aus seiner Parkposition lösen und bei Annäherung der Andockeinheit (16) unkontrolliert mit dieser zusammenstoßen und somit die Andockmagneten (35) beschädigen. Außerdem ist dadurch sichergestellt, dass die automatische Referenzierung der X-Achse auch noch nach einem Systemneustart während des Druckkopfwechsels möglich ist, da zu jeder Zeit mindestens eine der beiden Lichtschranken (29) unverdeckt ist.

### Vertikales Positioniersystem (Fig. 8)

Die Druckplattform - nicht dargestellt - wird von einer Stützkonstruktion getragen, die sich hier aus drei U-förmigen Stützprofilen (39) und einer L-förmigen Rückwand (40) zusammensetzt. An letzterer sind zwei Linearlager (41) montiert, die sich auf zwei Führungsschienen (42) in Z-Richtung vertikal bewegen lassen. Die Führungsschienen (42) sind am Rahmen (25) sowie an der Unterseite des Gehäuses (nicht dargestellt) befestigt, so dass sie auch noch nach der Endmontage ausgerichtet werden können. Die vertikale Positionierung erfolgt über eine Spindelmutter (43), die ebenfalls an der Rückwand der Stützkonstruktion (40) befestigt ist und mit Hilfe einer Kugelumlaufspindel (44) vertikal bewegt werden kann. Letztere ist über eine Kupplung (45) mit einem Schrittmotor (46) verbunden, der an der Oberseite des Rahmens (25) befestigt ist. Zwischen Kupplung (45) und Unterseite des Rahmens (25) befindet sich ein Axiallager (47), um den Schrittmotor (46) von den auftretenden Axialkräften zu entlasten.

### Druckbett und Druckplattform (Fig. 9)

Das entfernbare Druckbett (14) besteht beispielsweise aus einer ferromagnetischen Federstahlplatte (48) mit einer speziellen Druckoberfläche (49) und je zwei Kunststoffplatten (50) auf beiden Seiten, die von Nieten (51) gehalten werden und beim Entfernen des Druckbetts (14) als Griffe dienen, um Verletzungen durch scharfe Kanten oder Verbrennungen durch heiße Oberflächen zu vermeiden. Zudem können die oberen Kunststoffplatten (50) dafür genutzt werden, die Druckoberfläche (49) auf der Federstahlplatte (48) zu fixieren, während die unteren Kunststoffplatten (50) dabei helfen, das Druckbett (14) auf der darunter befindlichen Druckplattform zu zentrieren. Die Druckplattform besteht ebenfalls aus mehreren Schichten. Unter der aus ferromagnetischem Stahl gefertigten Trägerplatte (52) befindet sich eine Abstandsplatte (53) mit Aussparungen für hitzeresistente Magnete (54), die die Trägerplatte (52) von unten magnetisieren, so dass das ferromagnetische Druckbett (14) darauf haftet. Unter der Abstandsplatte (53), die zwecks Wärmeleitung und Gewichtseinsparung aus Aluminium bestehen kann, ist eine Heizmatte (55) befestigt, die das Druckbett (14) während des Drucks von unten aufheizt, um die Haftung des Druckobjektes (12) auf der Druckoberfläche (49) zu verbessern. Eine Isoliermatte (56) unterhalb der Heizmatte (55) reduziert nach unten auftretende Wärmeverluste.
Da die Isoliermatte (56) nicht genügend Stabilität bietet, sind Trägerplatte (52) und Abstandsplatte (53) über Abstandsbolzen (57) mit den Stützprofilen (39) des vertikalen Positioniersystems verbunden. Zur Befestigung werden Senkschrauben (58) verwendet, um die Wärmeleitung zum Druckbett (14) durch eine ebene Kontaktfläche zwischen Trägerplatte (52) und Federstahlplatte (48) zu verbessern.
Ein entfernbares Druckbett (14) hat den Vorteil, dass es nach dem Druck zusammen mit dem Druckobjekt (12) aus dem Bauraum (2) entnommen werden kann, ohne das Druckobjekt (12) vorher ablösen zu müssen. Durch die Verwendung der Federstahlplatte (48) wird zudem das Ablösen erleichtert, da sich das Druckbett (14) an den Seiten leicht nach hinten biegen lässt. Alternativ kann das Druckbett (14) zusammen mit dem Druckobjekt (12) in ein Lösungsmittel gelegt werden, um die löslichen Stützstrukturen (13) zu entfernen und das Druckobjekt (12) somit vom Druckbett (14) abzulösen. Da die Druckoberfläche (49) mit der Zeit abnutzen kann, kann das entfernbare Druckbett (14) zudem sehr leicht ausgetauscht werden.

### Automatische Druckbett-Kalibrierung (Fig.10 und Fig. 11)

Für einen zuverlässigen Druck ist es wichtig, dass der Abstand zwischen der Druckoberfläche (49) und der Düse des Druckkopfes (8, 9) sehr genau eingestellt ist, da ein zu geringer Abstand zu einer Verstopfung und ein zu großer Abstand zu einer Ablösung des Druckobjektes (12) oder der Stützstrukturen (13) von der Druckoberfläche (49) führen kann. Aufgrund fertigungs- und montagebedingter Ungenauigkeiten ist es daher vorteilhaft, den Abstand vor Inbetriebnahme des 3D-Druckers genau zu kalibrieren. Um die bestmöglichen Druckergebnisse zu erzielen, sollte dies vor jedem neuen Druckauftrag erfolgen.

Im Gegensatz zu einer manuellen Kalibrierung, die vor allem bei mehreren Druckköpfen (8, 9) sehr aufwändig und anspruchsvoll ist, hilft die automatische Kalibrierung, Zeit zu sparen und Fehler zu vermeiden. Dazu wird das Druckbett (14) schachbrettartig in mindestens drei Kalibrierpunkte unterteilt, die mit dem Druckkopf (8) der Reihe nach angefahren werden. An jedem Kalibrierpunkt wird das Druckbett (14) nach oben gefahren bis es den Druckkopf (8) berührt und die dazugehörige Position gespeichert. Danach wird es wieder nach unten gefahren und die Prozedur am nächsten Kalibrierpunkt wiederholt.
Nachdem alle Kalibrierpunkte angefahren wurden, wird aus den gesammelten Daten per Regression die Ausrichtung und die Oberflächenkontur (bei mehr als 3 Kalibrierpunkten) des Druckbetts (14) ermittelt. Beim späteren Druck kann so die vertikale Position des Druckbetts (14) in Abhängigkeit der horizontalen Position des Druckkopfes (8) dynamisch angepasst werden, so dass die Düse immer den gleichen Abstand zur Druckoberfläche (49) bzw. zum Druckobjekt (12) aufweist. Eine Schrägstellung des Druckobjektes (12) infolge eines schräg stehenden Druckbetts (14) kann durch eine entsprechende horizontale Verschiebung der einzelnen Schichten ebenfalls kompensiert werden.
Durch Anfahren eines beliebigen Kalibrierpunktes mit dem zweiten Druckkopf (9) kann zudem der vertikale Abstand zwischen den Düsen beider Druckköpfe ermittelt werden, der beim späteren Druck ebenfalls kompensiert werden kann. Bei einem Zwei-Düsen-Druckkopf oder einer mechanischen Kalibrierung wäre eine Kompensation des vertikalen Abstandes zweier Düsen nicht möglich. Ein weiterer Vorteil der dynamischen Kompensation mit mehr als drei Kalibrierpunkten ist zudem die Möglichkeit, Unebenheiten der Druckoberfläche (49) auszugleichen.

Der genaue Berührpunkt wird beispielsweise mit Hilfe eines Beschleunigungssensors - nicht dargestellt - ermittelt, der die bei der Kollision von Druckkopf (8, 9) und Druckbett (14) auftretenden Erschütterungen registriert. Eine weitere Möglichkeit zur Bestimmung des Berührpunktes ist die Überwachung des Motorsignals ("back-EMF") zum Antrieb des vertikalen Positioniersystems, das sich ändert sobald das nach oben fahrende Druckbett (14) auf einen Widerstand trifft.
Da die Kalibrierung bevorzugt auf dem direkten Kontakt zwischen Düsenspitze und Druckoberfläche (49) beruht, treten im Gegensatz zu anderen Verfahren (mit separater Oberflächen-Abtastung) keine relativen Fehler auf. So besteht bei der Verwendung eines ausfahrbaren Mikroschalters ("z-probe") zur Abtastung der Druckoberfläche (49) zwischen Düsenspitze und Umschaltpunkt des Mikroschalters immer ein fehlerbehafteter Abstand, der sich negativ auf die Genauigkeit der Kalibrierung auswirkt.
Im vorliegenden Fall werden beispielsweise neunundvierzig schachbrettartig verteilte Kalibrierpunkte verwendet, die jeweils dreimal angefahren werden, um die Genauigkeit der Messungen durch Mittelwertbildung zu verbessern. Ist die Abweichung einer Messung vom Mittelwert zu groß, werden die drei Messungen wiederholt, um falsche Messwerte durch äußere Einflüsse zu vermeiden. Es hat sich herausgestellt, dass die Kalibrierung bei kalter Düse am zuverlässigsten funktioniert, da ansonsten die Messergebnisse des Beschleunigungssensors durch die Vibrationen des bei heißer Düse laufenden Lüfters oder durch aus der heißen Düse austretendes Druckmaterial verfälscht werden können.
Während des Drucks kann ein gegebenenfalls vorgesehener Beschleunigungssensor außerdem zur Messung der Bewegungsfrequenz genutzt werden. Sobald diese einen kritischen Frequenzbereich erreicht, kann die Druckgeschwindigkeit temporär angepasst werden, um anderenfalls auftretende Resonanzen zu vermeiden.
Fig. 11 zeigt insbesondere eine schematische Darstellung der mathematischen Abbildung einer Referenzebene 140, einer Oberfläche (des Basiskörpers) 141, einer ersten Druckschicht 142 und einer zweiten Druckschicht 143.

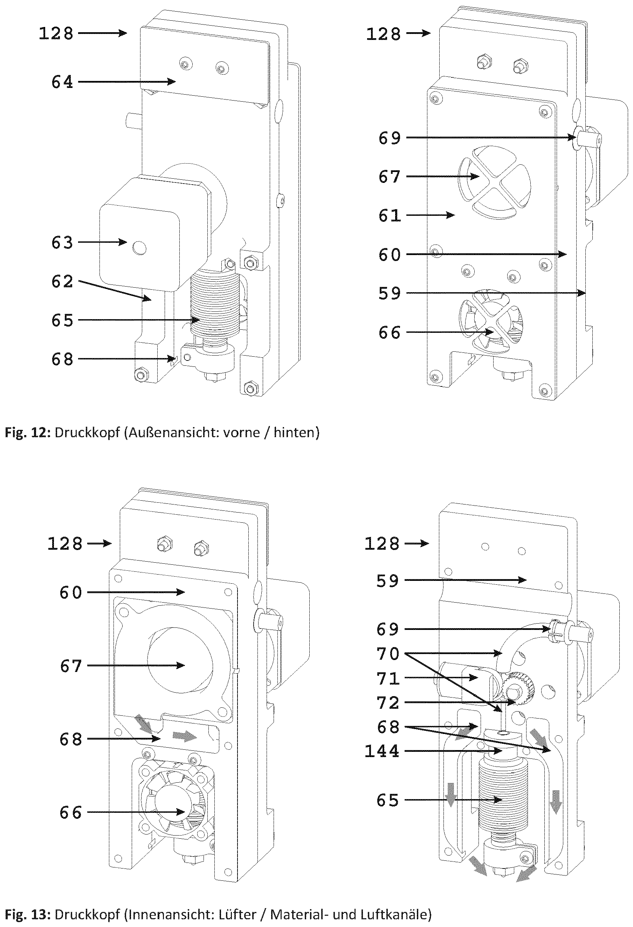

### Druckkopf (Fig. 12, Fig. 13)

Der Druckkopf (8, 9) besteht beispielsweise unter anderem aus einem spritzgegossenem Vorder- und Mittelteil (59, 60) sowie aus einer rückwärtigen Abdeckplatte (61). Das Vorderteil (59) wird an der Verbindungsplatte (34) befestigt und besitzt auf der Vorderseite eine Aussparung (62) für die beiden Zahnriemen (17) und den Andockmagneten (35). Am Vorderteil (59) sind außerdem ein Schrittmotor (63) für die Materialextrusion sowie ein Flachbandkabel (64) für die Stromversorgung und Signalübertragung befestigt.
In der Aussparung an der Unterseite des Druckkopfes (8, 9) befindet sich die Schmelzeinheit (65), in der das feste Druckmaterial verflüssigt wird, bevor es auf das Druckbett (14) aufgetragen wird. Diese wird von einem an der Abdeckplatte (61) befestigten Axiallüfter (66) gekühlt. Die Kühlung des aufgetragenen Druckmaterials erfolgt durch einen zwischen Mittelteil (60) und Abdeckplatte (61) befestigten Radiallüfter (67) in Verbindung mit einem innen verlaufenden Luftkanal (68).
Der Versorgungsschlauch (6, 7), über den das Druckmaterial seitlich in den Druckkopf (8, 9) gelangt, wird von einer selbstgreifenden Schlauchkupplung (69) gehalten. Über eine Führungsrille (70) wird es nach unten geleitet, wo es von einem horizontal beweglichen Schlitten (71) mit einer Feder auf der einen und einer Leerlaufrolle auf der anderen Seite gegen die Antriebsrolle (72) gedrückt wird. Diese wird vom Schrittmotor (63) angetrieben und befördert das Druckmaterial in die darunter liegende Schmelzeinheit (65), die an ihrem oberen Ende zwischen Vorder- und Mittelteil (59, 60) befestigt ist.
Um die Erstarrung des extrudierten Materials auf dem Druckbett (14) zu beschleunigen und somit die Druckqualität zu verbessern, kann es in allen Ausführungsformen gekühlt werden. Dazu erzeugt der Radiallüfter (67) einen Luftstrom, der durch Öffnungen im Mittelteil (60) nach vorne und durch Luftkanäle (68) zwischen Vorder- und Mittelteil (59/60) auf beiden Seiten der Schmelzeinheit (65) nach unten geleitet wird. Durch Auslässe am unteren Ende wird der Luftstrom schließlich nach innen geleitet, wo das flüssige Material aus der Düse austritt. Im Vergleich zu einer einseitigen Kühlung wird durch die zweiseitige Kühlung eine deutliche Verbesserung der Druckqualität erreicht.

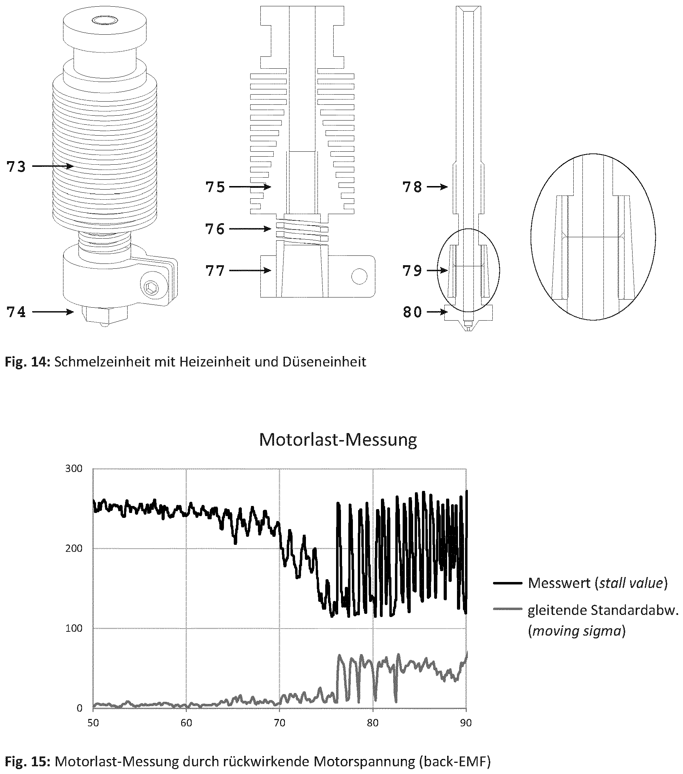

### Schmelzeinheit (Fig. 14)

Die Düsenanordnung oder Schmelzeinheit (65) umfasst eine Heizeinheit (73) und eine Düseneinheit (74), in der das Druckmaterial geführt wird. Die Heizeinheit (73) umfasst einen Kühlkörper (75), an dem über eine spiralförmige Temperaturbarriere (76) ein ringförmiges Heizelement (77) befestigt ist. Die Düseneinheit (74) umfasst ein Führungsrohr (78), das über eine konische Verbindungshülse (79) an der Düse (80) befestigt ist und von unten in den Kühlkörper (75) eingeschraubt wird, um so die Düseneinheit (74) mit der Heizeinheit (73) zu verbinden.

Da die Düse (80) mit der Zeit verstopfen kann, ist eine hohe Wartungsfreundlichkeit von entscheidender Bedeutung. Durch die Verwendung einer Düseneinheit (74), die als Ganzes ausgetauscht werden kann, wird der Düsenwechsel deutlich erleichtert, da die Düse (80) im Gegensatz zur herkömmlichen Bauweise, bei der die Düse (74) direkt mit dem Heizelement (77) verbunden ist, weder vorher aufgeheizt noch von diesem getrennt werden muss.
Wird die Düseneinheit (74) in die Heizeinheit (73) geschraubt, wird die konische Verbindungshülse (79) gegen die ebenfalls konische Innenseite am unteren Ende des Kühlkörper (75) gedrückt, so dass die Wärme vom Heizelement (73) über diesen und die Verbindungshülse (79) auf die Düse (80) übertragen werden kann. Die spiralförmige Temperaturbarriere (76) verringert dabei den Wärmeabfluss nach oben und dient gleichzeitig als Federung, um den Kontakt zwischen Heizeinheit (73) und Düseneinheit (74) und somit die Wärmeübertragung auf die Düse (80) zu verbessern.
Für die Druckqualität ist es von entscheidender Bedeutung, das Druckmaterial schnell zu erhitzen und den Übergangsbereich zwischen festem und flüssigem Zustand durch einen hohen Temperaturgradienten im Druckmaterial möglichst kurz zu halten. Aus diesem Grund muss die Wärmeübertragung zur Düse (80) möglichst hoch, nach oben jedoch möglichst gering sein, wobei nach oben auftretende Wärmeverluste durch eine aktive Kühlung im oberen Bereich schnell abgeführt werden müssen.
Zur besseren Abfuhr der nach oben auftretenden Wärmeverluste sowie zur besseren Wärmeübertragung auf die Düse (80) sollte der Kühlkörper (75) aus einem thermisch gut leitenden Material wie Aluminium hergestellt werden. Gleiches gilt für die Verbindungshülse (79) sowie für die Düse (80). Dagegen sollte das Führungsrohr (78) aus einem thermisch schlecht leitenden Material wie Edelstahl oder Titan gefertigt sein, um einen hohen Temperaturgradienten entlang des Druckmaterials zu ermöglichen. Um die Lebensdauer der Düseneinheit (74) zu erhöhen, kann die Innenseite des Führungsrohrs (78) eine möglichst geringe Reibung gegenüber dem teilweise viskosen Druckmaterial aufweisen, was durch Oberflächenveredelungsverfahren wie Polieren, Härten, Galvanisieren oder Beschichten erreicht werden kann. Insbesondere kommen dafür Polieren und Nitrieren sowie eine galvanische PTFE-Beschichtung der Innenseite in Betracht.

### Automatische Materialfluss-Überwachung (Fig. 15)

Durch Messung der rückwirkenden Motorspannung ("back-EMF") kann die Motorlast im Druckkopf ermittelt werden, um potentielle Extrusionsprobleme (z.B. durch ein Verstopfen) frühzeitig erkennen und beheben zu können. Während der Messwert ("stall value") bei einer normalen Extrusion relativ konstant ist (t = 50 - 60), fällt er bei auftretenden Extrusionsproblemen zunächst ab (t = 60 - 75) und schwankt stark, wenn der Motor wegen der hohen Last Schritte auslässt (t = 75 - 90). Extrusionsprobleme werden erkannt, sobald die gleitende Standardabweichung ("moving sigma") einen bestimmten Wert überschreitet.

Bei auftretenden Extrusionsproblemen wird der Druckvorgang beispielsweise automatisch unterbrochen und eine Reinigungs-Prozedur durchgeführt, bei der das Druckmaterial im Druckkopf mehrmals vor und zurück bewegt wird, um mögliche Ablagerungen aus der Düse zu spülen, bevor der Druck an der gleichen Stelle fortgesetzt wird. Werden weiterhin Extrusionsprobleme festgestellt, wird die Reinigungs-Prozedur wiederholt bis der Nutzer nach dem dritten erfolglosen Versuch aufgefordert wird, die Düse zu wechseln.

Die Messung der rückwirkenden Motorspannung (back-EMF) unterstützt darüber hinaus die automatische Material-Einführung (siehe "Materialkassette und Versorgungseinheit"). Sobald sich die Motorlast erhöht, hat das Druckmaterial, das von der Vorschubeinheit zum Druckkopf befördert wird, den Motor erreicht und wird von diesem in die noch kalte Düse gedrückt. Somit ist das Druckmaterial vollständig eingeführt und muss von der Vorschubeinheit nicht weiter eingeführt werden.

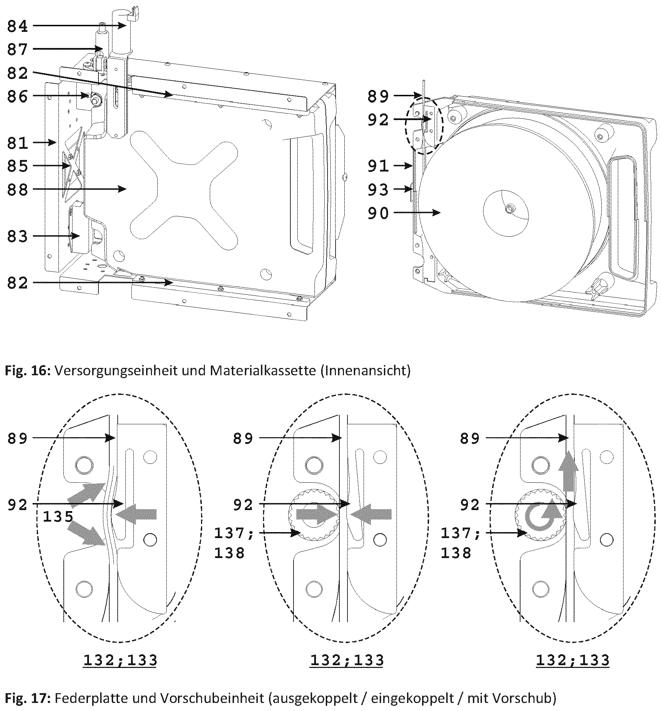

### Versorgungseinheit und Materialkassette (Fig. 16)

Die beiden Versorgungseinheiten (4, 5) für Modell- und Stützmaterial sind an beiden Seiten der Trennwand links des Bauraumes (2) befestigt. Sie umfassen einen Einschubschacht (81), zwei Paar Führungsschienen (82), eine Auswurfeinheit (83), eine Verriegelungseinheit (84), eine berührungslose Übertragungseinrichtung wie beispielsweise eine RFID-oder NFC-Einheit (85), eine Vorschubeinheit (86) und eine Adaptereinheit (87).
Das Druckmaterial (89) befindet sich auf einer Spule (90) im Inneren der Materialkassette (88) und verlässt diese über einen Führungskanal zwischen den beiden spritzgegossenen Außenschalen (91) am hinteren oberen Ende. Kurz vor der Austrittsöffnung befindet sich eine Aussparung für die Vorschubeinheit (86) sowie eine Federplatte aus Kunststoff (92), die das Druckmaterial (89) gegen die gegenüberliegende Wand des Führungskanals drückt und somit verhindert, dass es ins Innere der Materialkassette (88) fällt. An der Rückwand der Materialkassette (88) ist ein berührungslose Übertragungseinrichtung wie beispielsweise ein RFID- oder NFC-Chip (93) angebracht, der von der berührungslosen Übertragungseinrichtung wie beispielsweise der RFID- oder NFC-Einheit (85) an der Rückwand des Einschubschachtes (81) ausgelesen und beschrieben werden kann.
Die RFID-Technologie beispielsweise erlaubt das automatische und berührungslose Identifizieren von Objekten mit Radiowellen. Ein RFID-Chip besteht aus einem Mikrochip mit einer Speichereinheit und einer Antenne. Das RFID-Modul ist gleichzeitig Sender und Empfänger und kann die auf einem in der Nähe befindlichen RFID-Chip gespeicherten Daten auslesen bzw. manipulieren. Auch wenn andere Technologien für die Kommunikation zwischen Materialkassette und Drucker zum Einsatz kommen können, wird hier stellvertretend von der RFID-Technologie ausgegangen. Alternativ zu einem RFID-Chip können in allen Ausführungsformen aber jegliche geeignete berührungslose Übertragungseinrichtungen verwendet werden.

Wird eine Materialkassette (88) in eine Versorgungseinheit (4/5) eingeführt, greifen die Führungsschienen (82) an der oberen und unteren Innenseite des Einschubschachtes (81) in entsprechende Nuten in der Materialkassette (88) ein und die an der Rückwand des Einschubschachtes (81) befestigte Auswurfeinheit (83) wird gespannt. Sobald die richtige Position erreicht ist, schnappt die Verriegelungseinheit (84) in eine entsprechende Vertiefung an der Oberseite der Materialkassette (88) ein und fixiert diese somit in der richtigen Position.
Gleichzeitig wird das Druckmaterial (89) von der Vorschubeinheit (86) gegen die Federplatte (92) in der Materialkassette (88) gedrückt, so dass es sich von der Wand des Führungskanals löst und von der Vorschubeinheit (86) bewegt werden kann (siehe Fig. 17). Da die Lebensdauer der Federplatte (92) nur die Lebensdauer der Materialkassette (88) erreichen muss, ist der Verschleiß durch Reibung unproblematisch.
Sobald die Materialkassette (88) vollständig eingeführt wurde, liest die berührungslose Übertragungseinrichtung, insbesondere die RFID-Einheit (85) die darauf befindliche berührungslose Übertragungseinrichtung, insbesondere den RFID-Chip (93) aus, auf dem gegebenenfalls alle Informationen über das enthaltene Druckmaterial (89) gespeichert sind wie Seriennummer, Materialtyp, Haltbarkeitsdatum, Sicherheitscode, und verbleibende Materialmenge, die nach jedem Gebrauch aktualisiert wird. Dabei wird automatisch erkannt, wenn eine Materialkassette (88) eingelegt wird, um welchen Materialtyp es sich handelt, ob es noch verwendbar ist und ob es für den bevorstehenden Druck ausreicht. Zudem können die materialabhängigen Parameter wie die Drucktemperatur automatisch an die eingelegte Materialkassette (88) angepasst werden.

Bevor der Druck gestartet wird, wird das Druckmaterial (89) zunächst von der Vorschubeinheit (86) aus der Materialkassette (88) geschoben, über eine Adaptereinheit (87) in den Versorgungsschlauch (6, 7) eingeführt und in diesem zum Druckkopf (8, 9) weitergeleitet. Sobald das Druckmaterial (89) den Motor im Druckkopf (63) erreicht hat, was durch Messung der rückwirkenden Motorspannung ("back-EMF", siehe oben) erkannt wird, kann die Düse (77) aufgeheizt und der Druck gestartet werden. Während des Druckvorgangs laufen die beiden Motoren in der Vorschubeinheit (86) und im Druckkopf (63) synchron, um eine gleichmäßige Materialzufuhr zu gewährleisten.
Bevor die Materialkassette (88) wieder entnommen werden kann, muss das Druckmaterial (89) zunächst aus dem Versorgungsschlauch (6, 7) in die Materialkassette (88) zurückgeführt werden, indem es von der Vorschubeinheit (86) zurückgezogen wird. Sobald der Sensor in der Adaptereinheit (87) erkennt, dass das Druckmaterial (89) den Versorgungsschlauch (6, 7) vollständig verlassen hat, wird die Verriegelungseinheit (84) geöffnet, so dass die Materialkassette (88) von der Auswurfeinheit (83) leicht nach vorne gedrückt wird und aus der Versorgungseinheit (4/5) entnommen werden kann.

## Patentansprüche

1. Vorrichtung zur Bildung eines formstabilen, dreidimensionalen Objektes (12) durch konsekutives oder kontinuierliches Auftragen und Aushärten eines formbaren Druckmaterials (89), insbesondere FFF-3D-Drucker, umfassend:
- einen als Basis für den Aufbau des Objektes (12) wirkenden Basiskörper (14),
- mindestens einen Druckkopf (8, 9) zum Auftragen des Druckmaterials,
- eine Bewegungsvorrichtung (94) zur Änderung der relativen Lage des Druckkopfes (8, 9) gegenüber dem Basiskörper (14), und
- mindestens ein Druckmaterialreservoir (88) zur Aufnahme des Druckmaterials (12) und zur Ausgabe des Druckmaterials (12) an den Druckkopf (8, 9),
- wobei die Bewegungsvorrichtung (94) mindestens ein sich entlang einer x-Achse (10) erstreckendes, langgestrecktes erstes Trägerelement (97) umfasst,
- wobei ein mit dem Druckkopf (8, 9) verbundener oder verbindbarer Antriebsschlitten (98) entlang der x-Achse (10) am ersten Trägerelement (97) linear geführt und insbesondere parallelgeführt ist, wobei zwei Druckköpfe (8, 9) vorgesehen sind, **dadurch gekennzeichnet,**
- **dass** der Antriebsschlitten (98) eine Kupplungsvorrichtung (99) aufweist,
- und **dass** der Antriebsschlitten (98) über die Kupplungsvorrichtung (99) mit den Druckköpfen (8, 9) koppelbar und von den Druckköpfen (8, 9) lösbar ist,
- wobei der Antriebsschlitten (98) über die Kupplungsvorrichtung (99) wahlweise mit einem der Druckköpfe (8, 9), oder mit keinem der Druckköpfe (8, 9), oder mit beiden Druckköpfen (8, 9) gekoppelt ist.

2. Vorrichtung nach der Anspruch 1, **dadurch gekennzeichnet, dass** die durch die Kupplungsvorrichtung (99) hergestellte Verbindung des Antriebsschlittens (98) mit dem Druckkopf (8, 9) eine magnetische oder eine kraftschlüssige Verbindung ist, die insbesondere bei Überwinden der Haltekraft der Kupplungsvorrichtung (99) durch Bewegen des Antriebsschlittens (98) entlang der x-Achse (10) trennbar ist.

3. Vorrichtung nach einem der Ansprüche 1 oder 2 **dadurch gekennzeichnet, dass** die Kupplungsvorrichtung (99) einen magnetischen oder magnetisierbaren Körper (35) umfasst, der über magnetische Kräfte mit einem Element des Druckkopfs (8, 9) koppelbar oder gekoppelt ist.

4. Vorrichtung nach einem der Ansprüche 1 bis 3, **dadurch gekennzeichnet, dass** die Druckköpfe (8, 9) jeweils über einen Druckkopfschlitten (100) entlang der x-Achse (10) am ersten Trägerelement (97) linear geführt sind.

5. Vorrichtung nach einem der Ansprüche 1 bis 4, **dadurch gekennzeichnet, dass** der Antriebsschlitten (98) entlang des Verlaufs des ersten Trägerelements (97) zwischen den beiden Druckkopfschlitten (100) der beiden Druckköpfe (8, 9) angeordnet ist.

6. Vorrichtung nach einem der Ansprüche 1 bis 5, **dadurch gekennzeichnet,**
- **dass** das erste Trägerelement (97) einen Schienenabschnitt (101) aufweist, in dem die Druckköpfe (8, 9) entlang der x-Achse (10) bewegbar und positionierbar sind, wobei in den beiden Endbereichen (102) des Schienenabschnitts (101) oder des ersten Trägerelements (97) jeweils eine Haltevorrichtung (104) zur temporären Fixierung jeweils eines Druckkopfs (8, 9) und insbesondere jeweils eine Parkposition (105) vorgesehen ist,
- und/oder dass das erste Trägerelement (97) einen Schienenabschnitt (101) aufweist, in dem die Druckköpfe (8, 9) entlang der x-Achse (10) bewegbar und positionierbar sind, wobei in den beiden Endbereichen (102) des Schienenabschnitts (101) oder des ersten Trägerelements (97) jeweils eine Haltevorrichtung (104) zur temporären Fixierung jeweils eines Druckkopfs (8, 9) vorgesehen ist, wobei die Haltevorrichtungen (104) jeweils ein Halteelement (106), wie insbesondere einen bewegbaren Riegel (107) umfassen, wobei die Halteelemente (106) der beiden Haltevorrichtungen (104) gleichzeitig, synchronisiert oder mechanisch miteinander gekoppelt betätigbar sind oder wobei die Halteelemente (106) der beiden Haltevorrichtungen (104) unabhängig voneinander betätigbar sind.

7. Vorrichtung nach einem der Ansprüche 1 bis 6, **dadurch gekennzeichnet,**
- **dass** die Bewegungsvorrichtung (94) mindestens ein sich entlang der x-Achse (10) erstreckendes, langgestrecktes erstes Trägerelement (97) umfasst,
- **dass** die Bewegungsvorrichtung (94) mindestens ein sich entlang der y-Achse erstreckendes (11), langgestrecktes zweites Trägerelement (103) umfasst,
- **dass** das erste Trägerelement (97) entlang der y-Achse (11) am zweiten Trägerelement (97) linear geführt und insbesondere parallelgeführt ist,
- **dass** das zweite Trägerelement (103) insbesondere ortsfest oder starr mit dem Maschinengestell (108) verbunden ist,
- und **dass** ein mit dem Druckkopf (8, 9) verbundener oder verbindbarer Antriebsschlitten (98) entlang der x-Achse (10) am ersten Trägerelement (97) linear geführt und insbesondere parallelgeführt ist, sodass eine x-y-Kinematik (109) zur Bewegung des Druckkopfs (8, 9) in einer x-y-Ebene (110) gebildet ist.

8. Vorrichtung nach einem der Ansprüche 1 bis 7, **dadurch gekennzeichnet,**
- **dass** die Bewegungsvorrichtung (94) einen mit dem Antriebsschlitten (98) verbundenen ersten Antriebsriemen (111) zur Bewegung des Druckkopfs (8, 9), mindestens einen ersten Riemenantrieb (112) mit einem Riemenantriebsrad (113) zum Antrieb des Antriebsriemens (111) und mehrere Umlenkrollen (26) zur Umlenkung des Antriebsriemens (111) umfasst,
- wobei der erste Riemenantrieb (112) insbesondere ortsfest am Maschinengestell (108) angebracht ist,
- wobei mindestens eine Umlenkrolle (26) am ersten Trägerelement (97) und mindestens eine Umlenkrolle (26) am Maschinengestell (108) angebracht ist,
- wobei der erste Antriebsriemen (111) im Wesentlichen in einer ersten Antriebsebene (114) verläuft, die parallel zur x-y-Ebene (110) verläuft,
- und/oder dass die Bewegungsvorrichtung (94) einen mit dem Antriebsschlitten (98) verbundenen zweiten Antriebsriemen zur Bewegung des Druckkopfs, mindestens einen zweiten Riemenantrieb (115) mit einem Riemenantriebsrad (112) zum Antrieb des Antriebsriemens (111) und mehrere Umlenkrollen (26) zur Umlenkung des Antriebsriemens (111) umfasst,
- wobei der zweite Riemenantrieb (115) insbesondere ortsfest am Maschinengestell (108) angebracht ist,
- wobei mindestens eine Umlenkrolle (26) am ersten Trägerelement (97) und mindestens eine Umlenkrolle (26) am Maschinengestell (108) angebracht ist,
- wobei der zweite Antriebsriemen (116) im Wesentlichen entlang einer zweiten Antriebsebene (117) verläuft, die parallel und beabstandet zur ersten Antriebsebene (114) und/oder parallel zur x-y-Ebene (110) verläuft.

9. Vorrichtung nach Anspruch 8, **dadurch gekennzeichnet,**
- **dass** die Bewegungsvorrichtung (94) pro Antriebsriemen (111, 116) zwei angetriebene Umlenkrollen (71) zum Antrieb des Antriebsriemens (111, 116) umfasst
- oder dass die Bewegungsvorrichtung (94) pro Antriebsriemen (111, 116) zwei Riemenantriebe (112, 115) zum Antrieb des Antriebsriemens (111, 116) umfasst,
- wobei die beiden angetriebenen Umlenkrollen (71) oder die beiden Riemenantriebe (112, 115) eines Antriebsriemens (111, 116) im Verlauf des Antriebsriemens (111, 116) vor und nach der Verbindungsstelle (118) mit dem Antriebsschlitten (98) angeordnet sind, und dass die beiden Antriebe (112, 115) insbesondere synchronisiert sind.

10. Vorrichtung nach einem der Ansprüche 8 oder 9, **dadurch gekennzeichnet, dass** die Bewegungsvorrichtung (94) pro Antriebsriemen (111, 116) zwei Riemenantriebe (112, 115) oder zwei angetriebene Umlenkrollen (71) zum Antrieb des Antriebsriemens (111, 116) umfasst, wobei die beiden Riemenantriebe (112, 115) oder die beiden angetriebenen Umlenkrollen (71) eines Antriebsriemens (111, 116) im Verlauf des Antriebsriemens (111, 116) in jeweils einer Eckposition (119) unmittelbar vor und nach der Verbindungsstelle (118) mit dem Antriebsschlitten (98) am Maschinengestell (108) angebracht sind.

11. Vorrichtung nach einem der Ansprüche 1 bis 10, **dadurch gekennzeichnet,**
- **dass** die Bewegungsvorrichtung (94) eine Basisantriebsvorrichtung (120) zur Bewegung und insbesondere zur Parallelbewegung des Basiskörpers (14) entlang der z-Achse (15) umfasst,
- wobei die Basisantriebsvorrichtung (120) einen Basisantrieb (121) und mindesten ein Führungselement (122) umfasst,
- wobei der Basisantrieb (121) als Linearantrieb (123) und insbesondere als Schrittmotor (46) mit einer Spindel (44) und einer mit der Kugelumlaufspindel (44) in Wirkkontakt stehenden Spindelmutter (43) ausgebildet ist,
- wobei das Führungselement (122) als Linearführung (124) und insbesondere als entlang einer Schiene (42) geführte Buchse (125) ausgebildet ist,
- und/oder dass die Bewegungsvorrichtung eine Basisantriebsvorrichtung (120) zur Bewegung und insbesondere zur Parallelbewegung des Basiskörpers (14) entlang der z-Achse (15) umfasst,
- wobei die Basisantriebsvorrichtung (120) einen Basisantrieb (121) und mindesten ein Führungselement (122) umfasst,
- wobei der Basisantrieb (121) als Linearantrieb (123) und insbesondere als Schrittmotor (46) mit einer Kugelumlaufspindel (44) und einer mit der Kugelumlaufspindel (44) in Wirkkontakt stehenden Spindelmutter (43) ausgebildet ist,
- wobei das Führungselement (122) als Linearführung (124) und insbesondere als entlang einer Schiene (42) geführte Buchse (125) ausgebildet ist,
- wobei eine als Kragträger ausgebildete Druckplattform (126) zur Halterung des Basiskörpers (14) vorgesehen ist, die im Wesentlichen normal zur Bewegungsrichtung des Basiskörpers (14), insbesondere in einer zur x-y-Ebene (110) parallelen Ebene verläuft, und die über die Basisantriebsvorrichtung (120) entlang der z-Achse (15) verschiebbar und antreibbar ist.

12. **Verfahren** zur Bildung eines formstabilen, dreidimensionalen Objektes durch konsekutives oder kontinuierliches Auftragen und Aushärten eines formbaren Druckmaterials, insbesondere zur Bildung eines formstabilen, dreidimensionalen Objektes durch konsekutives oder kontinuierliches Auftragen und Aushärten zweier formbarer Druckmaterialien, und insbesondere Verfahren zum Druckkopfwechsel, umfassend folgende Schritte:
- Bewegen eines Antriebsschlittens und des mit dem Antriebsschlitten über eine Kupplungsvorrichtung gekuppelten ersten Druckkopfs,
- Bewegen des Antriebsschlittens zu einem zweiten Druckkopf, der sich in einer im Endbereich des ersten Trägerelements angeordneten Parkposition befindet und dort von einer Haltevorrichtung temporär arretiert ist,
- Kuppeln des zweiten Druckkopfs mit dem Antriebsschlitten über die Kupplungsvorrichtung,
- Lösen der Haltevorrichtung des zweiten Druckkopfs, sodass der zweite Druckkopf aus seiner Parkposition bewegt werden kann,
- wobei vor der Kupplung des zweiten Druckkopfs mit dem Antriebsschlitten oder nach der der Kupplung des zweiten Druckkopfs mit dem Antriebsschlitten der Antriebsschlitten und der mit dem Antriebsschlitten über eine Kupplungsvorrichtung gekuppelte erste Druckkopf zur Parkposition des ersten Druckkopfs befördert wird, dort die Haltevorrichtung des ersten Druckkopfs geschlossen wird und der erste Druckkopfs vom Antriebsschlitten gelöst wird, sodass der erste Druckkopf in seiner Parkposition arretiert ist,
- wobei nach dem Druckkopfwechsel lediglich der zweite Druckkopf mit dem Antriebschlitten verbunden ist;
oder umfassend folgende Schritte:
- Bewegen des Antriebsschlittens und des mit dem Antriebsschlitten über eine Kupplungsvorrichtung gekuppelten ersten Druckkopfs zu der Parkposition des ersten Druckkopfs am Endbereich des ersten Trägerelements,
- Schließen der Haltevorrichtung des ersten Druckkopfs und Lösen des ersten Druckkopfs vom Antriebsschlitten durch Lösen der Kupplungsvorrichtung, sodass der erste Druckkopf in seiner Parkposition arretiert ist,
- Bewegen des Antriebsschlittens zu einem zweiten Druckkopf, der sich in einer im gegenüberliegenden Endbereich des ersten Trägerelements angeordneten Parkposition befindet und dort von einer Haltevorrichtung temporär arretiert ist,
- Kuppeln des zweiten Druckkopfs mit dem Antriebsschlitten über die Kupplungsvorrichtung,
- Lösen der Haltevorrichtung des zweiten Druckkopfs, sodass der zweite Druckkopf aus seiner Parkposition bewegt werden kann,
- und Bewegen des Antriebsschlittens und des mit dem Antriebsschlitten über die Kupplungsvorrichtung gekuppelten zweiten Druckkopfs.

13. Verfahren nach Anspruch 12, umfassend folgende Schritte:
- Bewegen des Antriebsschlittens und des mit dem Antriebsschlitten über eine Kupplungsvorrichtung gekuppelten ersten Druckkopfs zu einem zweiten Druckkopf, der sich in einer im Endbereich des ersten Trägerelements angeordneten Parkposition befindet und dort von einer Haltevorrichtung temporär arretiert ist,
- Kuppeln des zweiten Druckkopfs mit dem Antriebsschlitten über die Kupplungsvorrichtung, sodass der Antriebsschlitten mit beiden Druckköpfen verbunden ist,
- Lösen der Haltevorrichtung des zweiten Druckkopfs, sodass der zweite Druckkopf aus seiner Parkposition bewegt werden kann,
- Bewegen des Antriebsschlittens und der beiden mit dem Antriebsschlitten über die Kupplungsvorrichtung gekuppelten Druckköpfe zu der Parkposition des ersten Druckkopfs am gegenüberliegenden Endbereich des ersten Trägerelements,
- Schließen der Haltevorrichtung des ersten Druckkopfs und Lösen des ersten Druckkopfs vom Antriebsschlitten durch Lösen der Kupplungsvorrichtung, sodass der erste Druckkopf in seiner Parkposition arretiert ist,
- Bewegen des Antriebsschlittens und des mit dem Antriebsschlitten über die Kupplungsvorrichtung gekuppelten zweiten Druckkopfs.

14. Verfahren nach Anspruch 12 oder 13 **dadurch gekennzeichnet, dass** die Haltevorrichtung des ersten Druckkopfs und die Haltevorrichtung des zweiten Druckkopfs gleichzeitig, synchronisiert oder miteinander gekoppelt gelöst oder geschlossen werden.

15. Verfahren nach einem der Ansprüche 12 bis 14, **dadurch gekennzeichnet, dass** zum Arretieren eines Druckkopfs in der Parkposition der Druckkopf in den entsprechenden Endbereich des ersten Trägerelements verschoben wird, dann die entsprechende Haltevorrichtung geschlossen wird, und dann die Kupplungsvorrichtung durch Wegbewegen des Antriebsschlittens und durch Überwinden der Haltekraft getrennt wird.

## Claims

1. A device for forming a dimensionally stable, three-dimensional object (12) by consecutive or continuous application and curing of a formable printing material (89), in particular FFF 3D printer, comprising:
- a base body (14) acting as base for the structure of the object (12),
- at least one print head (8, 9) for applying the printing material,
- a moving device (94) for changing the relative position of the print head (8, 9) with respect to the base body (14), and
- at least one printing material reservoir (88) for holding the printing material (12) and for supplying the printing material (12) to the print head (8, 9),
- wherein said moving device (94) comprises at least one elongated first carrier element (97) extending along an x-axis (10),
- wherein a drive carriage (98) connected or connectable to the print head (8, 9) is linearly guided along the x-axis (10) on the first carrier element (97) and is in particular guided in parallel,
- wherein two print heads (8, 9) are provided,
**characterized**
- **in that** the drive carriage (98) has a coupling device (99),
- and **in that** the drive carriage (98) can be coupled to the print heads (8, 9) and can be released from the print heads (8, 9) via the coupling device (99),
- wherein the drive carriage (98) is selectively coupled to one of the print heads (8, 9), to neither of the print heads (8, 9), or to both print heads (8, 9) via the coupling device (99).

2. The device according to claim 1, **characterized in that** the connection of the drive carriage (98) to the print head (8, 9) established by the coupling device (99) is a magnetic or a non-positive connection which can be disconnected, in particular when the holding force of the coupling device (99) is overcome by moving the drive carriage (98) along the x-axis (10).

3. The device according to one of claims 1 or 2, **characterized in that** the coupling device (99) comprises a magnetic or magnetizable body (35), which can be coupled or is coupled to an element of the print head (8, 9) via magnetic forces.

4. Device according to one of claims 1 to 3, **characterized in that** each print head (8, 9) is linearly guided along the x-axis (10) on the first carrier element (97) by means of a print head carriage (100).

5. The device according to one of claims 1 to 4, **characterized in that** the drive carriage (98) is arranged along the course of the first carrier element (97) between the two print head carriages (100) of the two print heads (8, 9).

6. The device according to one of claims 1 to 5, **characterized**
- **in that** the first carrier element (97) has a rail section (101) in which the print heads (8, 9) can be moved and positioned along the x-axis (10), wherein a holding device (104) for temporarily fixing a respective print head (8, 9) and in particular a respective parking position (105) is provided in each of the two end regions (102) of the rail section (101) or of the first carrier element (97),
- and/or in that the first carrier element (97) has a rail section (101) in which the print heads (8, 9) can be moved and positioned along the x-axis (10), a holding device (104) for temporarily fixing a respective print head (8, 9) being provided in each of the two end regions (102) of the rail section (101) or of the first carrier element (97), wherein each holding device (104) comprises a holding element (106), such as in particular a movable latch (107), wherein the holding elements (106) of the two holding devices (104) can be actuated simultaneously, in a synchronized manner or when mechanically coupled to one another, or wherein the holding elements (106) of the two holding devices (104) can be actuated independently of one another.

7. The device according to one of claims 1 to 6, **characterized**
- **in that** said moving device (94) comprises at least one elongated first carrier element (97) extending along the x-axis (10),
- **in that** said moving device (94) comprises at least one elongated second carrier element (103) extending along the y-axis (11),
- **in that** the first carrier element (97) is linearly guided, and is in particular guided in parallel, along the y-axis (11) on the second carrier element (97),
- **in that** the second carrier element (103) is in particular stationarily or rigidly connected to the machine frame (108),
- and **in that** a drive carriage (98) connected or connectable to the print head (8, 9) is linearly guided along the x-axis (10) on the first carrier element (97), and in particular is guided in parallel, so that an x-y-kinematics (109) is formed for moving the print head (8, 9) in an x-y-plane (110).

8. The device according to one of claims 1 to 7, **characterized**
- **in that** the moving device (94) comprises a first drive belt (111) connected to the drive carriage (98) for moving the print head (8, 9), at least one first belt drive (112) with a belt drive wheel (113) for driving the drive belt (111), and a plurality of deflection rollers (26) for deflecting the drive belt (111),
- wherein the first belt drive (112) is in particular fixedly mounted on the machine frame (108),
- wherein at least one deflection roller (26) is attached to the first carrier element (97) and at least one deflection roller (26) is attached to the machine frame (108),
- wherein the first drive belt (111) extends substantially in a first drive plane (114) which is parallel to the x-y-plane (110),
- and/or in that the moving device (94) comprises a second drive belt connected to the drive carriage (98) for moving the print head, at least one second belt drive (115) with a belt drive wheel (112) for driving the drive belt (111) and a plurality of deflection rollers (26) for deflecting the drive belt (111),
- wherein the second belt drive (115) is in particular fixedly mounted on the machine frame (108),
- wherein at least one deflection roller (26) is attached to the first carrier element (97) and at least one deflection roller (26) is attached to the machine frame (108),
- wherein the second drive belt (116) extends substantially in a second drive plane (114) which is parallel to and spaced apart from the first drive plane (114) and/or parallel to the x-y-plane (110).

9. The device according to claim 8, **characterized**
- **in that** the moving device (94) comprises two driven deflection rollers (71) per drive belt (111, 116) for driving the drive belt (111, 116),
- or in that the moving device (94) comprises two belt drives (112, 115) per drive belt (111, 116) for driving the drive belt (111, 116),
- wherein the two driven deflection rollers (71) or the two belt drives (112, 115) of a drive belt (111, 116) are arranged along the drive belt (111, 116) before and after the connection point (118) with the drive carriage (98), and in that the two drives (112, 115) are in particular synchronized.

10. The device according to one of claims 8 or 9, **characterized in that** the moving device (94) comprises two belt drives (112, 115) or two driven deflection rollers (71) per drive belt (111, 116) for driving the drive belt (111, 116), wherein the two belt drives (112, 115) or the two driven deflection rollers (71) of a drive belt (111, 116) are mounted on the machine frame (108) along the drive belt (111, 116) in a respective corner position (119) immediately before and after the connection point (118) with the drive carriage (98).

11. The device according to one of claims 1 to 10, **characterized**
- **in that** the moving device (94) comprises a base drive device (120) for the movement and in particular for parallel movement of the base body (14) along the z-axis (15),
- wherein the base drive device (120) comprises a base drive (121) and at least one guide member (122),
- wherein the base drive (121) is designed as a linear drive (123) and in particular as a step motor (46) with a spindle (44) and a spindle nut (43) in operative contact with the recirculating ball screw (44),
- wherein the guide element (122) is designed as a linear guide (124) and in particular as a bushing (125) guided along a rail (42),
- and/or in that the moving device comprises a base drive device (120) for the movement and in particular for parallel movement of the base body (14) along the z-axis (15),
- wherein the base drive device (120) comprises a base drive (121) and at least one guide member (122),
- wherein the base drive (121) is designed as a linear drive (123) and in particular as a step motor (46) with a recirculating ball screw (44) and a spindle nut (43) in operative contact with the recirculating ball screw (44),
- wherein the guide element (122) is designed as a linear guide (124) and in particular as a bushing (125) guided along a rail (42),
- wherein a printing platform (126) designed as a cantilever beam is provided for holding the base body (14), which platform is substantially normal to the direction of movement of the base body (14), in particular in a plane parallel to the x-y-plane (110), and which can be displaced and driven along the z-axis (15) by means of the base drive device (120).

12. A method for forming a dimensionally stable, three-dimensional object by consecutive or continuous application and curing of a formable printing material, in particular for forming a dimensionally stable, three-dimensional object by consecutive or continuous application and curing of two formable printing materials, and in particular a method for changing the print head, comprising the following steps of:
- moving a drive carriage and the first print head coupled to the drive carriage via a coupling device,
- moving the drive carriage to a second print head, which is in a parking position arranged in the end region of the first carrier element and is temporarily locked there by a holding device,
- coupling the second print head to the drive carriage via the coupling device,
- releasing the holding device of the second print head so that the second print head can be moved from its parking position,
- wherein before the second print head is coupled to the drive carriage or after the second print head is coupled to the drive carriage, the drive carriage and the first print head coupled to the drive carriage via a coupling device are conveyed to the parking position of the first print head, the holding device of the first print head is closed there and the first print head is released from the drive carriage so that the first print head is locked in its parking position,
- wherein after the print head change only the second print head is connected to the drive carriage;
or comprising the following steps of:
- moving the drive carriage and the first print head coupled to the drive carriage via a coupling device to the parking position of the first print head in the end region of the first carrier element,
- closing the holding device of the first print head and releasing the first print head from the drive carriage by releasing the coupling device so that the first print head is locked in its parking position,
- moving the drive carriage to a second print head, which is in a parking position arranged in the opposite end region of the first carrier element and is temporarily locked there by a holding device,
- coupling the second print head to the drive carriage via the coupling device,
- releasing the holding device of the second print head so that the second print head can be moved from its parking position,
- and moving the drive carriage and the second print head coupled to the drive carriage via the coupling device.

13. The method according to claim 12, comprising the following steps of:
- moving the drive carriage and the first print head coupled to the drive carriage via a coupling device to a second print head, which is in a parking position arranged in the end region of the first carrier element and is temporarily locked there by a holding device,
- coupling the second print head to the drive carriage via the coupling device so that the drive carriage is connected to both print heads,
- releasing the holding device of the second print head so that the second print head can be moved from its parking position,
- moving the drive carriage and the two print heads coupled to the drive carriage via the coupling device to the parking position of the first print head in the opposite end region of the first carrier element,
- closing the holding device of the first print head and releasing the first print head from the drive carriage by releasing the coupling device so that the first print head is locked in its parking position,
- moving the drive carriage and the second print head coupled to the drive carriage via the coupling device.

14. The method according to claim 12 or 13, **characterized in that** the holding device of the first print head and the holding device of the second print head are released or closed simultaneously, in a synchronized manner or when coupled to one other.

15. The method according to one of claims 12 to 14, **characterized in that** for locking a print head in the parking position, the print head is moved into the corresponding end region of the first carrier member, then the corresponding holding device is closed, and then the coupling device is disconnected by moving the drive carriage away and by overcoming the holding force.

## Revendications

1. Dispositif pour former un objet (12) tridimensionnel indéformable par application et durcissement consécutifs ou continus d'un matériau d'impression (89) formable, notamment une imprimante 3D FFF, comprenant :
- un corps de base (14) servant de base pour la construction de l'objet (12),
- au moins une tête d'impression (8, 9) pour l'application du matériau d'impression,
- un dispositif de déplacement (94) pour modifier la position relative de la tête d'impression (8, 9) par rapport au corps de base (14), et
- au moins un réservoir de matériau d'impression (88) pour recevoir le matériau d'impression (12) et pour délivrer le matériau d'impression (12) à la tête d'impression (8, 9),
- dans lequel ledit dispositif de déplacement (94) comprend au moins un premier élément porteur (97) allongé s'étendant le long d'un axe des x (10),
- dans lequel un chariot d'entraînement (98) relié ou pouvant être relié à la tête d'impression (8, 9) est guidé linéairement le long de l'axe des x (10) sur le premier élément porteur (97) et est notamment guidé en parallèle,
- dans lequel deux têtes d'impression (8, 9) sont prévues,
**caractérisé**
- **en ce que** le chariot d'entraînement (98) est équipé d'un dispositif d'accouplement (99),
- et **en ce que** le chariot d'entraînement (98) peut être couplé aux têtes d'impression (8, 9) et détaché des têtes d'impression (8, 9) par voie du dispositif d'accouplement (99),
- dans lequel le chariot d'entraînement (98) est couplé sélectivement à l'une des têtes d'impression (8, 9), ou à aucune des têtes d'impression (8, 9), ou aux deux têtes d'impression (8, 9) par voie du dispositif d'accouplement (99).

2. Dispositif selon la revendication 1, **caractérisé en ce que** la liaison du chariot d'entraînement (98) avec la tête d'impression (8, 9) établie par le dispositif d'accouplement (99) est une liaison magnétique ou de force qui peut être séparée, en particulier lorsque la force de retenu du dispositif d'accouplement (99) est surmontée, en déplaçant le chariot d'entraînement (98) le long de l'axe des x (10).

3. Dispositif selon l'une des revendications 1 ou 2, **caractérisé en ce que** le dispositif d'accouplement (99) comprend un corps (35) magnétique ou magnétisable qui peut être couplé ou est couplé à un élément de la tête d'impression (8, 9) par voie de forces magnétiques.

4. Dispositif selon l'une des revendications 1 à 3, **caractérisé en ce que** les têtes d'impression (8, 9) sont chacune guidées linéairement le long de l'axe des x (10) sur le premier élément porteur (97) par un chariot de tête d'impression (100).

5. Dispositif selon l'une des revendications 1 à 4, **caractérisé en ce que** le chariot d'entraînement (98) est disposé le long du tracé du premier élément porteur (97) entre les deux chariots de tête d'impression (100) des deux têtes d'impression (8, 9).

6. Dispositif selon l'une des revendications 1 à 5, **caractérisé**
- **en ce que** le premier élément porteur (97) présente un tronçon de rail (101) dans lequel les têtes d'impression (8, 9) peuvent être déplacées et positionnées le long de l'axe des x (10), un dispositif de fixation (104) pour la fixation temporaire d'une tête d'impression (8, 9) respective et en particulier une position d'arrêt (105) étant prévu dans chacune des deux zones d'extrémité (102) du tronçon de rail (101) ou du premier élément porteur (97),
- et/ou en ce que le premier élément de support (97) présente un tronçon de rail (101) dans lequel les têtes d'impression (8, 9) peuvent être déplacées et positionnées le long de l'axe des x (10), un dispositif de fixation (104) étant prévu dans chacune des deux zones d'extrémité (102) du tronçon de rail (101) ou du premier élément de support (97) pour la fixation temporaire d'une tête d'impression (8, 9) respective, dans lequel les dispositifs de fixation (104) comportent chacun un élément de fixation (106), tel que notamment un verrou mobile (107), dans lequel les éléments de fixation (106) des deux dispositifs de fixation (104) peuvent être actionnés simultanément, synchronisés ou couplés mécaniquement entre eux, ou dans lequel les éléments de fixation (106) des deux dispositifs de fixation (104) peuvent être actionnés indépendamment l'un de l'autre.

7. Dispositif selon l'une des revendications 1 à 6, **caractérisé**
- **en ce que** le dispositif de déplacement (94) comprend au moins un premier élément porteur (97) allongé s'étendant le long de l'axe des x (10),
- **en ce que** le dispositif de déplacement (94) comprend au moins un deuxième élément porteur (103) allongé s'étendant le long de l'axe des y (11),
- **en ce que** le premier élément porteur (97) est guidé linéairement, et en particulier est guidé parallèlement, le long de l'axe des y (11) sur le deuxième élément porteur (97),
- **en ce que** le deuxième élément porteur (103) est notamment relié de manière fixe ou rigide au bâti de machine (108),
- et **en ce qu'**un chariot d'entraînement (98) relié ou pouvant être relié à la tête d'impression (8, 9) est guidé linéairement, et en particulier est guidé parallèlement, le long de l'axe des x (10) sur le premier élément porteur (97), de sorte qu'une cinématique x-y (109) est formée pour le déplacement de la tête d'impression (8, 9) dans un plan x-y (110).

8. Dispositif selon l'une des revendications 1 à 7, **caractérisé**
- **en ce que** le dispositif de déplacement (94) comprend une première courroie d'entraînement (111) reliée au chariot d'entraînement (98) pour déplacer la tête d'impression (8, 9), au moins un premier entraînement par courroie (112) avec une roue d'entraînement par courroie (113) pour entraîner la courroie d'entraînement (111), et une pluralité de rouleaux de déviation (26) pour dévier la courroie d'entraînement (111),
- dans lequel le premier entraînement par courroie (112) est notamment monté de manière fixe sur le bâti de machine (108),
- dans lequel au moins un rouleau de déviation (26) est monté sur le premier élément porteur (97) et au moins un rouleau de déviation (26) est monté sur le bâti de machine (108),
- dans lequel la première courroie d'entraînement (111) s'étend sensiblement dans un premier plan d'entraînement (114) qui est parallèle au plan x-y (110),
- et/ou en ce que le dispositif de déplacement (94) comprend une deuxième courroie d'entraînement reliée au chariot d'entraînement (98) pour déplacer la tête d'impression, au moins une deuxième entraînement par courroie (115) avec une roue d'entraînement par courroie (112) pour entraîner la courroie d'entraînement (111), et une pluralité de rouleaux de déviation (26) pour dévier la courroie d'entraînement (111),
- dans lequel le deuxième entraînement par courroie (115) est notamment monté de manière fixe sur le bâti de machine (108),
- dans lequel au moins un rouleau de déviation (26) est monté sur le premier élément porteur (97) et au moins un rouleau de déviation (26) est monté sur le bâti de machine (108),
- dans lequel la deuxième courroie d'entraînement (116) s'étend sensiblement le long d'un deuxième plan d'entraînement (117) qui est parallèle et espacé du premier plan d'entraînement (114) et/ou parallèle au plan x-y (110).

9. Dispositif selon la revendication 8, **caractérisé**
- **en ce que** le dispositif de déplacement (94) comprend deux rouleaux de déviation (71) entraînés par courroie d'entraînement (111, 116) pour l'entraînement de la courroie d'entraînement (111, 116),
- ou en ce que le dispositif de déplacement (94) comprend deux entraînements par courroie (112, 115) par courroie d'entraînement (111, 116) pour l'entraînement de la courroie d'entraînement (111, 116),
- dans lequel les deux rouleaux de déviation (71) entraînés ou les deux entraînements par courroie (112, 115) d'une courroie d'entraînement (111, 116) sont disposés le long du tracé de la courroie d'entraînement (111, 116) avant et après le point de liaison (118) avec le chariot d'entraînement (98), et en ce que les deux entraînements (112, 115) sont en particulier synchronisés.

10. Dispositif selon l'une des revendications 8 ou 9, **caractérisé en ce que** le dispositif de déplacement (94) comprend deux entraînements par courroie (112, 115) ou deux rouleaux de déviation (71) entraînés par courroie d'entraînement (111, 116) pour l'entraînement de la courroie d'entraînement (111, 116), chacun des deux entraînements par courroie (112, 115) ou chacun des deux rouleaux de déviation (71) entraînés d'une courroie d'entraînement (111, 116) étant montés sur le bâti de machine (108) le long du tracé de la courroie d'entraînement (111, 116) dans une position d'angle (119) immédiatement avant et après le point de liaison (118) avec le chariot d'entraînement (98).

11. Dispositif selon l'une des revendications 1 à 10, **caractérisé**
- **en ce que** le dispositif de déplacement (94) comprend un dispositif d'entraînement de base (120) pour le déplacement et en particulier pour le déplacement parallèle du corps de base (14) le long de l'axe des z (15),
- dans lequel le dispositif d'entraînement de base (120) comprend un entraînement de base (121) et au moins un élément de guidage (122),
- dans lequel l'entraînement de base (121) est conçu comme un entraînement linéaire (123) et en particulier comme un moteur pas à pas (46) avec une broche (44) et un écrou de broche (43) en contact opérationnel avec la vis à billes (44),
- dans lequel l'élément de guidage (122) est conçu comme un guide linéaire (124) et en particulier comme une douille (125) guidée le long d'un rail (42),
- et/ou en ce que le dispositif de déplacement comprend un dispositif d'entraînement de base (120) pour le déplacement et en particulier pour le déplacement parallèle du corps de base (14) le long de l'axe des z (15),
- dans lequel le dispositif d'entraînement de base (120) comprend un entraînement de base (121) et au moins un élément de guidage (122),
- dans lequel l'entraînement de base (121) est conçu comme un entraînement linéaire (123) et en particulier comme un moteur pas à pas (46) avec une vis à billes (44) et un écrou de broche (43) en contact opérationnel avec la vis à billes (44),
- dans lequel l'élément de guidage (122) est conçu comme un guide linéaire (124) et en particulier comme une douille (125) guidée le long d'un rail (42),
- dans lequel une plate-forme d'impression (126) réalisée sous forme de poutre en console est prévue pour le maintien du corps de base (14), la plate-forme s'étendant sensiblement perpendiculairement à la direction de déplacement du corps de base (14), en particulier dans un plan parallèle au plan x-y (110), et pouvant être déplacée et entraînée le long de l'axe des z (15) par le dispositif d'entraînement de base (120).

12. Procédé pour former un objet tridimensionnel indéformable par application et durcissement consécutifs ou continus d'un matériau d'impression formable, en particulier pour former un objet tridimensionnel indéformable par application et durcissement consécutifs ou continus de deux matériaux d'impression formables, et en particulier procédé pour changer la tête d'impression, comprenant les étapes suivantes :
- déplacer un chariot d'entraînement et la première tête d'impression couplée au chariot d'entraînement par un dispositif d'accouplement,
- déplacer le chariot d'entraînement vers une deuxième tête d'impression qui se trouve dans une position d'arrêt disposée dans la zone d'extrémité du premier élément porteur et y est temporairement verrouillée par un dispositif de fixation,
- accoupler la deuxième tête d'impression au chariot d'entraînement par le dispositif d'accouplement,
- détacher le dispositif de fixation de la deuxième tête d'impression afin que la deuxième tête d'impression puisse être déplacée de sa position d'arrêt,
- dans lequel, avant que la deuxième tête d'impression ne soit couplée au chariot d'entraînement ou après que la deuxième tête d'impression ait été couplée au chariot d'entraînement, le chariot d'entraînement et la première tête d'impression couplée au chariot d'entraînement par un dispositif d'accouplement sont amenés à la position d'arrêt de la première tête d'impression, le dispositif de fixation de la première tête d'impression y est fermé et la première tête d'impression est détacher du chariot d'entraînement afin que la première tête d'impression soit verrouillée dans sa position d'arrêt,
- dans lequel après le changement de tête d'impression, seule la deuxième tête d'impression est connectée au chariot d'entraînement ;
ou comprenant les étapes suivantes :
- déplacer le chariot d'entraînement et la première tête d'impression couplée au chariot d'entraînement par un dispositif d'accouplement jusqu'à la position d'arrêt de la première tête d'impression dans la zone d'extrémité du premier élément porteur,
- fermer le dispositif de fixation de la première tête d'impression et détacher la première tête d'impression du chariot d'entraînement en relâchant le dispositif d'accouplement afin que la première tête d'impression soit verrouillée dans sa position d'arrêt,
- déplacer le chariot d'entraînement vers une deuxième tête d'impression, qui se trouve dans une position d'arrêt située dans la zone d'extrémité opposée du premier élément porteur et y est temporairement verrouillée par un dispositif de fixation,
- accoupler la deuxième tête d'impression au chariot d'entraînement par le dispositif d'accouplement,
- détacher le dispositif de fixation de la deuxième tête d'impression afin que la deuxième tête d'impression puisse être déplacée de sa position d'arrêt,
- et déplacer le chariot d'entraînement et la deuxième tête d'impression couplée au chariot d'entraînement par le dispositif d'accouplement.

13. Procédé selon la revendication 12, comprenant les étapes suivantes :
- déplacer le chariot d'entraînement et la première tête d'impression couplée au chariot d'entraînement par un dispositif d'accouplement vers une deuxième tête d'impression qui se trouve dans une position d'arrêt disposée dans la zone d'extrémité du premier élément porteur et y est temporairement verrouillée par un dispositif de fixation,
- accoupler la deuxième tête d'impression au chariot d'entraînement par le dispositif d'accouplement afin que le chariot d'entraînement soit relié aux deux têtes d'impression,
- détacher le dispositif de fixation de la deuxième tête d'impression afin que la deuxième tête d'impression puisse être déplacée de sa position d'arrêt,
- déplacer le chariot d'entraînement et les deux têtes d'impression couplées au chariot d'entraînement par le dispositif d'accouplement jusqu'à la position d'arrêt de la première tête d'impression à l'extrémité opposée du premier élément porteur,
- fermer le dispositif de fixation de la première tête d'impression et détacher la première tête d'impression du chariot d'entraînement en relâchant le dispositif d'accouplement afin que la première tête d'impression soit verrouillée dans sa position d'arrêt,
- déplacer le chariot d'entraînement et la deuxième tête d'impression couplée au chariot d'entraînement par le dispositif d'accouplement.

14. Procédé selon la revendication 12 ou 13, **caractérisé en ce que** le dispositif de fixation de la première tête d'impression et le dispositif de fixation de la deuxième tête d'impression sont détachés ou fermés simultanément, de manière synchronisée ou couplée l'un avec l'autre.

15. Procédé selon l'une des revendications 12 à 14, **caractérisé en ce que**, pour verrouiller une tête d'impression en position d'arrêt, la tête d'impression est déplacée dans la zone d'extrémité correspondante du premier élément porteur, puis le dispositif de fixation correspondant est fermé, et ensuite le dispositif d'accouplement est déconnecté en éloignant le chariot d'entraînement et en surmontant la force de retenue.
